(19) Europäisches Patentamt
European Patent Office
Office européen des brevets

(11) **EP 3 239 260 B1**

(12) **EUROPÄISCHE PATENTSCHRIFT**

(45) Veröffentlichungstag und Bekanntmachung des Hinweises auf die Patenterteilung:
**20.11.2019   Patentblatt 2019/47**

(51) Int Cl.:
*C09J 133/08* (2006.01)       *C08L 33/08* (2006.01)

(21) Anmeldenummer: **17166260.4**

(22) Anmeldetag: **12.04.2017**

(54) **VERWENDUNG HAFTKLEBEMASSEN FÜR DIE VERKLEBUNG VON FLEXIBLEN DRUCKPLATTEN**

USE OF ADHESIVE SUBSTANCES FOR STICKING TOGETHER FLEXIBLE PRINTING PLATES

UTILISATION DE SUBSTANCES ADHÉSIVES DESTINÉES À COLLER DES PLAQUES D'IMPRESSION SOUPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2016   DE 102016207374**

(43) Veröffentlichungstag der Anmeldung:
**01.11.2017   Patentblatt 2017/44**

(73) Patentinhaber: **tesa SE**
**22848 Norderstedt (DE)**

(72) Erfinder:
• **PÜTZ, Benjamin**
**22527 Hamburg (DE)**

• **THEBUD, Nils, Dr.**
**21335 Lüneburg (DE)**
• **Wieghardt, Lisa**
**22087 Hamburg (DE)**

(56) Entgegenhaltungen:
EP-A1- 1 820 835          US-A1- 2015 175 852
US-A1- 2016 096 980

• **NIIR Board of Consultants and Engineers: "Modern Technology of Printing & Writing Inks (with Formulae & Processes)", 31. Dezember 2015 (2015-12-31), Asia Pacific Business Press Inc., 106-E, Kamla Nagar, Delhi-110 007 (INDIA), XP008185142, ISBN: 978-81-7833-082-2 Seiten 166-167, * Seite 166, Zeile 44 - Zeile 45 ***

EP 3 239 260 B1

**Beschreibung**

Die Erfindung betrifft die Verwendung einer Haftklebemasse, umfassend mindestens 60 Gew.-% eines Polymerblends, wobei der Polymerblend aus einer ersten Polymerkomponente A auf Polyacrylatbasis und zumindest einer zweiten Polymerkomponente B auf Polyacrylatbasis besteht und die erste Polymerkomponente A zu mindestens x Gew.-% im Polymerblend vorliegt, wobei $90 \leq x \leq 99$, und wobei die zweite Polymerkomponente B und gegebenenfalls vorhandene weitere Polymerkomponenten in Summe zu y Gew.-% im Polymerblend vorliegen, wobei y = 100 - x, zum Verkleben von Druckplatten auf insbesondere gekrümmten Oberflächen.

In der Druckindustrie sind unterschiedliche Verfahren bekannt, um Motive mittels druckender Vorlagen auf beispielsweise Papier oder Folien zu übertragen. Eine Möglichkeit besteht im sogenannten Flexodruck.

Im Flexodruckverfahren werden flexible Druckplatten (auch als Klischees bezeichnet) auf Druckzylinder oder Druckhülsen (letztere auch als Sleeves bezeichnet) verklebt. Derartige Klischees bestehen beispielsweise aus einer Polyethylenterephthalat-Folie (PET-Folie), auf die eine Schicht eines Fotopolymers aufgebracht ist, in die durch Belichtung der druckenden und anschließendem Auswaschen der nichtdruckenden Elemente das entsprechende Druckrelief eingebracht werden kann. Die Verklebung des Klischees auf dem Druckzylinder bzw. der Druckhülse erfolgt dann über die PET- Folie. Zur Verklebung werden in der Regel doppelseitige Haftklebebänder eingesetzt, an die sehr hohe Anforderungen gestellt werden. Für den Druckprozess muss das Haftklebeband eine bestimmte Härte, aber auch eine bestimmte Elastizität aufweisen. Diese Eigenschaften müssen sehr genau eingestellt werden, damit das erzeugte Druckbild gemäß den Anforderungen das gewünschte Ergebnis liefert. Hohe Anforderungen werden ebenfalls an die Haftklebemasse gestellt, da die Klebkraft ebenfalls ausreichend sein sollte, damit sich die Druckplatte nicht von dem doppelseitigen Haftklebeband oder das Haftklebeband vom Zylinder bzw. der Hülse ablöst. Dies gilt auch bei erhöhten Temperaturen - zum Beispiel von 40 bis 60 °C - und bei höheren Druckgeschwindigkeiten, ebenso bei niedrigeren Temperaturen als Raumtemperatur - wie zum Beispiel 15 °C. Neben dieser Eigenschaft muss die Haftklebemasse aber auch reversible Hafteigenschaften besitzen, um die Druckplatten nach den Druckvorgängen wieder ablösen zu können (dabei muss sowohl die Klebeverbindung des Haftklebebandes zum Druckzylinder bzw. zur Druckhülse als auch die zum Klischee rückstandsfrei zu lösen sein, um eine Wiederverwendbarkeit beider Komponenten zu gewährleisten). Diese Ablösbarkeit sollte auch nach einer Verklebung über einen längeren Zeitraum (wie beispielsweise bis zu 6 Monaten) gegeben sein. Zudem ist es erwünscht, dass sich das Haftklebeband und insbesondere die Druckplatte ohne Zerstörung dieser, sowie ohne großen Kraftaufwand wieder entfernen lässt, da die Druckplatten in der Regel mehrfach eingesetzt werden. Zudem sollten keine Rückstände auf der Druckplatte und auf dem Zylinder bzw. der Hülse verbleiben. Zusammenfassend werden somit sehr hohe Anforderungen an die für diesen Einsatz geeigneten doppelseitigen Haftklebebänder gestellt.

Die rückstandsfreie Wiederablösbarkeit ist insbesondere bei polaren Untergründen wie beispielsweise Stahl ein Problem, da hier festgestellt wurde, dass die Klebkräfte im Laufe der Zeit erheblich ansteigen. Im Rahmen dieser Schrift werden in Bezug auf Oberflächen die Begriffe "polar" und "hochenergetisch", also mit einer hohen Oberflächenenergie (OFE), gleich gesetzt, ebenso die Begriffe "unpolar" und "niederenergetisch, da sich dieses vereinfachende Modell in der Praxis durchgesetzt hat. Dahinter steht die Erkenntnis, dass polare Dipolkräfte vergleichsweise stark sind gegenüber sogenannten "dispersen" oder unpolaren Wechselwirkungen, die ohne Beteiligung permanenter molekularer Dipole aufgebaut werden. Die Grundlage dieses Modells der Grenzflächenenergie und Grenzflächenwechselwirkungen ist die Vorstellung, dass polare Komponenten nur mit polaren wechselwirken und unpolare nur mit unpolaren.

Gemessen werden diese Energie und ihre Komponenten oft mittels Messung der statischen Kontaktwinkel unterschiedlicher Testflüssigkeiten. Den Oberflächenspannungen dieser Flüssigkeiten werden polare und unpolare Anteile zugeordnet. Aus den beobachteten Kontaktwinkeln der Tropfen auf der Prüfoberfläche werden die polaren und unpolaren Anteile der Oberflächenenergie der Prüfoberfläche ermittelt. Dies kann zum Beispiel nach dem WKR-Modell erfolgen. Eine industriell übliche alternative Methode ist die Bestimmung mittels Testtinten nach DIN ISO 8296.

Als Haftklebemassen kommen beispielsweise solche auf Naturkautschukbasis in Frage, wie etwa die EP 760 389 A dokumentiert. Für den genannten Einsatzzweck werden aber auch Haftklebebänder eingesetzt, die Haftklebemassen auf Polyacrylatbasis aufweisen. So beschreibt beispielsweise die WO 03/057497 A eine Acrylathaftklebemasse auf Blockcopolymerbasis für den genannten Anwendungszweck. Die WO 2004/067661 A offenbart ein Haftklebeband mit einer Haftklebemasse auf Basis eines weichen Acrylmonomers ($T_G$ < -20°C) aus mindestens 49,5 Gew-% eines harten, zyklischen oder linearen (Meth)Acrylsäureester-Monomers ($T_G$ > 30°C) und mindestens 10 Gew.-% funktionalisierter harter (Meth)Acrylsäure/-ester-Monomere ($T_G$ > 30°C), wobei die Haftklebemasse in einem zweistufigen Verfahren hergestellt wird.

Ein weiterer Nachteil vieler aus dem Stand der Technik bekannter Haftklebemassen für die Verklebung von Druckklischees zeigt sich insbesondere dann, wenn die verklebten Druckklischees von der Druckfarbe gereinigt werden sollen. Dies wird üblicherweise dadurch bewirkt, dass man Lösungsmittel - zum Beispiel solche, die auch als Lösungsmittel für die Farben an sich dienen - zum Abwaschen und Ablösen der Farben von den Klischees einsetzt. Hier werden häufig größere Mengen Lösungsmittel eingesetzt, was das Problem noch verschärft. Dabei kommt es unweigerlich zu einem Unterkriechen von Lösungsmittel unter die Ränder der Verklebung des Klischees auf dem Haftklebeband und der Ränder des Klebebandes auf dem Druckzylinder beziehungsweise der Druckhülse. Hierbei kann es zu einem Ablösen der Verklebung (des Klischees auf dem Klebeband bzw. des Klebebandes auf dem Zylinder bzw. der Hülse) kommen, da die Klebemassen des Haftklebebandes die notwendige Haftung verlieren. Die aufgrund dieser fehlenden Lösemittelbeständigkeit entstehenden abgehobenen Kanten ("Fahnen") werden im Prozess dann mitgedruckt, wodurch ein fehlerhaftes Druckbild entsteht (allgemein als "Fehldruck" bezeichnet), sofern es nicht sogar zu mechanischen Problemen mit den Fahnen in der Druckapparatur und somit zu Systemausfällen kommt. In der Praxis können deshalb vorteilhaft die Verklebungen von Druckklischees, die mit Klebemassen nach dem Stand der Technik montiert wurden, durch Versiegelung der jeweiligen Ränder mit einseitig klebenden Haftklebebändern oder mit Flüssig- oder Schmelzklebern gegen das Lösungsmittel geschützt werden.

Dieser zusätzliche Versiegelungsprozess bedeutet einen deutlichen Mehraufwand und es besteht die Gefahr, die teuren Druckklischees insbesondere bei Verwendung von Flüssig- oder Schmelzklebern bei der Demontage zu beschädigen.

Die EP 2 226 372 A1 offenbart eine Haftklebemasse auf Acrylatbasis für die Verklebung von Druckplatten auf Zylindern oder Hülsen, die einen hohen Acrylsäureanteil zwischen 8 und 15 Gew.-% aufweist. Weitere Monomere sind lineare und verzweigte Acrylsäureester, die in einem bestimmten Verhältnis zueinander vorliegen. Durch eine solche Klebemasse werden die Anforderungen bezüglich Kantenabhebeverhalten und Lösemittelbeständigkeit recht gut erfüllt. Haftklebemassen mit hohem Acrylsäureanteil neigen aber zu starkem Aufziehen auf polaren Substraten, wie beispielweise Stahl, aus dem Druckzylinder häufig bestehen. Zunehmend kommen auch Kunststoffsleeves, besonders häufig auf Polyurethanbasis, zum Einsatz. Die Massen auf der Druckhülsenseite müssen sowohl auf Stahl als auch auf niederenergetischen Hülsenoberflächen haften, was eine zusätzliche Herausforderung im Entwicklungsprozess darstellt. Dieses Problem stellt sich auch mit der Klebemasse der EP 2 226 372 A1, insbesondere wenn man sie auf der Seite des Klebebandes einsetzt, die zum Druckzylinder bzw. zur Druckhülse gerichtet ist. Daher ist die Demontage derartiger Klebemassen von solchen Untergründen mit Problemen verbunden; es treten sehr hohe Demontagekräfte auf, und es kann zum Bruch des eingesetzten Klebebandes kommen, oder es verbleiben Rückstände auf dem Substratuntergrund.

Um eine Haftklebemasse anzubieten, die auch unter dem Einfluss von Lösungsmitteln eine gute und sichere Verklebung auf im Flexodruck gängigen Material wie insbesondere auf PET (Polyethylenterephthalat) gewährleistet, sich aber dennoch auch nach längerer Zeit auch von sehr polaren Substraten - wie beispielsweise die Oberflächen von Druckzylindern aus Stahl oder die von polaren Kunststoffoberflächen bestimmter Druckhülsen - wieder ablösen lässt, wobei die Haftklebemasse bevorzugt insbesondere für das sichere Verkleben von Druckklischees geeignet sein sollte und wobei für ein Klebeband mit der Haftklebemasse die Stabilität des Klebebandverbundes, insbesondere die sichere Verankerung der Haftklebemasse auf Schaumträgern - wie polyolefinischen Schäumen - gewährleistet sein soll, offenbart die WO2014/001096 A1 eine Haftklebemasse auf Acrylatbasis, die 2 bis 20 Gew.-% eines N-Alkyl-substituierten Acrylamids und 5 bis 25 Gew.-% eines (Meth)Acrylesters mit einem linearen Alkylrest mit mindestens 12 C-Atomen sowie 0,5 bis 5 Gew.-% (Meth)Acrylsäure aufweist.

Solche Haftklebemassen weisen zwar gegenüber dem Stand der Technik verbesserte Eigenschaften auf, jedoch hat sich herausgestellt, dass die Verklebung der Druckplatten mit den an sich reversibel verklebenden Haftklebemassen durch Verunreinigungen in den Lösungsmitteln, mit denen die Druckplatten nach dem Druck gereinigt werden, geprimert werden.

Unter "Primern" wird im Bereich der Klebebänder üblicherweise verstanden, dass die Verklebungsfestigkeit auf Untergründen durch Vorbehandlung dieser Untergründe mit geeigneten Chemikalien erhöht werden kann. Vorliegend, wo die Reversibilität der Verklebung eine wichtige Rolle spielt, ist diese Primerung insbesondere dann unerwünscht, wenn sie unbeabsichtigt durch Verunreinigungen geschieht. Als "primernder Effekt" wird dabei vorliegend verstanden, dass im Vergleich zu mit reinem Lösungsmittel gereinigte Druckplatten, die Klebfestigkeit der Haftklebemasse auf den, durch enthaltene Farbreste in den Lösungsmitteln, verunreinigten Druckplatten signifikant erhöht wird.

Die Verunreinigungen stammen von Farbresten der Druckfarben in den Lösungsmitteln, die zum Reinigen verwendet werden, wobei bereits derart geringe Mengen an Verunreinigungen, die nicht einmal sichtbar sind, ausreichen, um diesen Effekt hervorzurufen. Auf diese Weise entstehen über die Zeit deutlich höhere Klebfestigkeiten, als dies zum Wiederablösen der Platten gewünscht ist. Die Druckplatten können teilweise nur unter sehr hohem Kraftaufwand abgelöst werden, wodurch sie auch beschädigt werden können, was eine Wiederverwendbarkeit der Platten unmöglich macht. Um dies zu vermeiden, ist der Drucker gezwungen, für jeden Reinigungsvorgang frisches Lösungsmittel und frische Reinigungstücher zu verwenden. Abgesehen davon, dass dies einen erhöhten Zeit- und Materialaufwand bedeutet, ist dies in der Praxis kaum umzusetzen. Gerade weil die vorhandenen Verschmutzungen mit dem Auge oftmals nicht zu erkennen sind, besteht keine Akzeptanz bei den Benutzern, Lösungsmittel und Reinigungstücher zu wechseln.

Aufgabe der vorliegenden Erfindung ist daher die Verwendung einer Haftklebemasse die bei der Verklebung von Druckplatten, insbesondere auf Druckzylindern und/oder Druckhülsen, dem unerwünschten primernden Effekt der Druckfarbenrückstände in den Lösungsmitteln, mit denen die Druckplatten gereinigt werden, entgegenwirkt und damit eine sogenannte "Ink Resistance" aufweist, weil sie unempfindlich gegen den Einfluss der Druckfarbenreste im Reinigungslösungsmittel ist. Die Klebfestigkeit der Haftklebemasse auf derart verunreinigten Oberflächen kann mit einer physikalischen Verankerung gleichgesetzt werden, dessen Verursacher auf zumindest ein in Druckfarben enthaltenes Bindemittel (auch Filmbildner genannt) zurückgeführt werden kann. Ein in Druckfarben üblich eingesetztes Bindemittel ist u.a. Cellulosenitrat (umgangssprachlich "Nitrocellulose", im Rahmen dieser Schrift werden beide Begriffe synonym verwendet), welches an der Verklebungsfläche eine Wechselwirkung mit der Haftklebemasse ausbilden kann und damit diesen Primereffekt bekanntermaßen verursacht.

Die Aufgabe wird mit der Verwendung einer Haftklebemasse zum Verkleben von Druckplatten auf insbesondere gekrümmten Oberflächen gelöst, die mindestens 60 Gew.-% eines Polymerblends umfasst, wobei der Polymerblend aus einer ersten Polymerkomponente A, einer zweite Polymerkomponente B und gegebenenfalls einer oder mehreren weitere Polymerkomponenten (C, D, ...) besteht, wobei die erste Polymerkomponente A zu mindestens x Gew.-% im Polymerblend vorliegt, wobei $90 \leq x \leq 99$, und wobei die zweite Polymerkomponente B und die gegebenenfalls vorhandenen weiteren Polymerkomponenten C, D, ... in Summe zu y Gew.-% im Polymerblend vorliegen, wobei $y = 100 - x$, wobei jede Polymerkomponente (A, B, C, ...) zu mindestens 60 Gew.-% auf (Meth)Acrylmonomere zurückzuführen ist, so dass keine der Polymerkomponenten (A, B, C, ...) bei Raumtemperatur mit einer der anderen Polymerkomponenten (A, B, C, ...) homogen mischbar ist, so dass ein Mehrphasensystem vorliegt.

Eine solche mehrphasige Ausgestaltung der Haftklebemasse, bei der eine der Komponenten in hohem Überschuss im definierten Mengenbereich vorliegt, reduziert die Widerstandsfähigkeit der Haftklebemasse gegen Einflüsse der Druckfarbenrückstände maßgeblich. Dies äußert sich darin, dass der (durch die auf der Oberfläche befindlichen Farbrückstände, erhöhte) Kraftaufwand, der erforderlich ist, um ein Klischee von dem Zylinder oder der Hülse abzulösen, gering ist. Insbesondere ist der Kraftaufwand gegenüber dem Kraftaufwand, der für ein Ablösen mit derselben Haftklebemasse ohne Einfluss der Druckfarbenrückstände erforderlich ist, nur geringfügig, vorzugsweise nur unmerklich, insbesondere gar nicht, erhöht.

Neben der vorstehend genannten Anforderung sollte die erfindungsgemäß zu verwendende Haftklebemasse bevorzugt auch die üblichen, bei der Verklebung von Druckplatten bestehenden Anforderungen so weit wie möglich erfüllen, namentlich seien hier genannt:

- Gewährleistung einer guten und sicheren Verklebung auf im Flexodruck gängigen Material wie insbesondere auf PET (Polyethylenterephthalat), auch unter dem Einfluss von Lösungsmitteln
- Lösbarkeit auch nach längerer Zeit auch von sehr polaren Substraten wie beispielsweise den Oberflächen von Druckzylindern aus Stahl oder den Oberflächen von polaren Kunststoffoberflächen bestimmter Druckhülsen
- Eignung für das sichere Verkleben von Druckklischees; wobei für ein Klebeband mit der Haftklebemasse die Stabilität des Klebebandverbundes, insbesondere die sichere Verankerung der Haftklebemasse auf Schaumträgern ,wie polyolefinischen Schäumen, und/oder auf Folienträgern gewährleistet sein soll.

Auch dieses Anforderungsprofil wird von der erfindungsgemäßen Haftklebemasse gut erfüllt.

Als Polymerkomponente wird im Rahmen dieser Schrift ein einzelnes Polymer verstanden oder eine Mischung von Polymeren, die aber untereinander homogen mischbar sind, so dass eine solche Mischung eine einzelne homogene Phase bildet. Die zugrundeliegenden Polymere können Homopolymere (aus eine einzigen Monomersorte) und/oder Copolymere (aus mehr als einer Monomersorte) sein.

Die Polymere der Polymerkomponenten in dieser Schrift sind solche, die zu mindestens 60 Gew.-% auf (Meth)Acrylmonomere (zur Bedeutung dieses Begriffes siehe weiter unten) zurückzuführen sind. Die Polymerkomponenten A und/oder B können vorteilhaft - und unabhängig voneinander - ausschließlich oder teilweise solche Polymere umfassen, die mindestsens zu 80 Gew.-% auf (Meth)Acrylmonomere zurückzuführen sind; in einer besondere Ausführung werden für die Polymerkomponenten A und/oder B Reinacrylatsysteme eingesetzt, also solche Polymere, die ausschließlich - also zu 100 Gew.-% - auf (Meth)Acrylmonomere zurückzuführen sind.

Sofern weitere Komponente C, D usw. vorhanden sind, können auch hier- unabhängig von der Zusammensetzung der Komponenten A und B, aber insbesondere dann, wenn diese das auch sind - Reinacrylatsysteme eingesetzt werden.

Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur, also 23 °C) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können.

Haftklebemassen bestehen üblicherweise aus einer Polymerkomponente, auch als Basispolymerkomponente bezeichnet, die ein Homopolymer, ein Copolymer oder eine Mischung aus Polymeren (Homopolymeren und/oder Copolymeren) sein kann, und gegebenenfalls Zusätzen (Cokomponenten, Additiven) zum Teil in erheblichem Umfang. Die Ausdrücke "Polymer(komponente) auf Basis bestimmter Monomere", "Polymer(komponente) auf Basis einer Monomermischung" oder "auf bestimmte Monomere zurückzuführendes Polymer oder zurückzuführende Polymerkomponente" bedeutet dabei wie allgemein üblich, dass das Polymer - beziehungsweise die Polymere der Polymerkomponente - durch - insbesondere radikalische - Polymerisation der entsprechenden Monomere beziehungsweise der entsprechenden Monomermischung erhalten werden kann.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere - also die Zusammensetzung der Monomermischung - bei der Polymerisation der der Haftklebemasse zugrunde liegenden Polymere, mittlere Molmasse und Molmassenverteilung der Polymere sowie durch optionale Beimischung von Zusatzstoffen (Art und Menge) beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur $T_G$ unterhalb der Anwendungstemperatur (also üblicherweise unterhalb der Raumtemperatur) aufweisen. Unterhalb der Glasübergangstemperatur $T_G$ verhalten sich Haftklebemassen sprödelastisch (glasartig-amorph bzw. teilkristallin); hier kann kein haftklebriges Verhalten ausgebildet werden. Oberhalb der Glasübergangstemperatur $T_G$ erweichen die Massen mit zunehmender Temperatur je nach Zusammensetzung mehr oder weniger stark und nehmen in einem bestimmten Temperaturbereich die für die haftklebrigen Eigenschaften geeigneten Viskositätswerte an, bevor sie bei noch höheren Temperaturen zu dünnflüssig werden, um noch haftklebrige Eigenschaften zu besitzen (es sei denn, sie zersetzen sich vorher).

Glasübergangstemperaturen werden angegeben als Ergebnis von Messungen mittels dynamischer Differenzkalorimetrie DDK gemäß der DIN 53 765; insbesondere Abschnitte 7.1 und 8.1, jedoch mit einheitlichen Heiz- und Kühlraten von 10 K/min in allen Heiz- und Kühlschritten (vergl. DIN 53 765; Abschnitt 7.1; Anmerkung 1). Die Probeneinwaage beträgt 20 mg. Eine Vorbehandlung der Haftklebemasse wird durchgeführt (vgl. Abschnitt 7.1, erster Lauf). Temperaturgrenzen: - 140 °C (statt $T_G$ - 50 °C) / + 200 °C (statt $T_G$ + 50 °C). Die angegebene Glasübergangstemperatur $T_G$ ist die Probentemperatur im Heizvorgang des zweiten Laufs, bei der die Hälfte der Änderung der spezifischen Wärmekapazität erreicht ist.

Die Angabe der Glasübergangstemperaturen als Charakteristikum der eingesetzten Monomere erfolgt in Bezug auf deren jeweiliges Homopolymer, das nach der Synthesevorschrift für Acrylathaftklebemassen im experimentellen Teil erhältlich ist, wobei statt der Monomermischung 400 g der jeweiligen Monomere eingesetzt wurden. Bestimmung des $T_G$ erfolgt nach Entfernung des Lösemittels im unvernetzten Zustand (in Abwesenheit von Vernetzern).

Insbesondere liegt die erfindungsgemäß zu verwendende Haftklebemasse phasensepariert vor, so dass die erfindungsgemäß zu verwendende Haftklebemasse zumindest mikroskopisch und zumindest bei Raumtemperatur - definiert als 23 °C - bevorzugt in mindestens zweiphasiger, gegebenenfalls in mehrphasiger Morphologie vor. so dass sich zumindest zwei oder mehr stabile Phasen ausbilden, die in sich jeweils homogen vorliegen.

Die in der Haftklebemasse enthaltenen Polymerkomponenten sind vorzugsweise so gewählt, dass sie bei 23 °C nicht bis zur Homogenität miteinander mischbar sind. Besonders bevorzugt sind die Polymerkomponenten zumindest in einem Temperaturbereich von 0 °C bis 50 °C, insbesondere von -30 °C bis 80 °C nicht homogen miteinander mischbar, so dass die Haftklebemasse in diesen Temperaturbereichen zumindest mikroskopisch mindestens zweiphasig vorliegt.

Komponenten sind im Sinne dieser Schrift als dann "nicht homogen miteinander mischbar" definiert, wenn sich auch nach innigem Vermischen die Ausbildung zumindest zweier stabiler Phasen physikalisch und/oder chemisch zumindest mikroskopisch nachweisen lässt, wobei die eine Phase reich an der einen Komponente und die zweite Phase reich an der anderen Komponente ist. Ein Vorliegen vernachlässigbar geringer Mengen der einen Komponente in der anderen, das einer Ausbildung der Mehrphasigkeit nicht entgegensteht, wird dabei als unbeachtlich angesehen. So können in der Phase der ersten Polymerkomponente A beispielsweise geringe Mengen der zweiten Polymerkomponente B vorliegen, sofern es sich nicht um wesentliche Mengen handelt, welche die Phasenseparation beeinflussen, entsprechendes gilt für geringe Mengen der Polymerkomponente A in der Polymerkomponente B sowie jeweils für die anderen in der Haftklebemasse vorhandenen Polymerkomponenten.

Die Phasentrennung kann insbesondere derart realisiert sein, dass diskrete Bereiche ("Domänen"), die reich an einer der Polymerkomponenten - etwa der ersten Polymerkomponente A - sind, also im Wesentlichen aus der entsprechenden Polymerkomponente gebildet sind -, in einer kontinuierlichen Matrix, die reich an einer anderen Polymerkomnponente - etwa der zweiten Polymerkomponente B - ist, also im Wesentlichen aus der Polymerkomponente B gebildet ist -, vorliegen. Sofern weitere Polymerkomponenten C, D, ... in der Haftklebemassen vorhanden sind, liegen diese in einer besonders bevorzugten Ausführung der Erfindung ebenfalls jeweils als diskrete Bereiche ("Domänen") in der durch die Polymerkomponente A gebildeten Matrix vor, und zwar unabhängig von den Domänen der Polyerkomponente B sowie unabhängig von Domänen aus gegebenenfalls weiteren vorhandenen Polymerkomponenten, so dass eine eine Mehrphasigkeit mit mehr als zwei Phasen - nämlich in der Anzahl der nicht homogen miteinander mischbaren Komponenten - vorliegt..

Ein geeignetes Analysesystem für eine Phasentrennung ist beispielsweise die Raster-Elektronenmikroskopie. Phasenseparation kann sich aber beispielsweise auch dadurch erkennen lassen, dass die unterschiedlichen Phasen zwei voneinander unabhängige Glasübergangstemperaturen bei der dynamischen Differenzkalorimetrie (DDK, DSC) aufweisen. Phasentrennung liegt erfindungsgemäß dann vor, wenn sie sich durch mindestens eine der Analysenmethoden eindeutig zeigen lässt.

Besonders vorteilhaft lässt sich eine Phasenseparierung zwischen zwei Polymerkomponenten realisieren, wenn sich die Hansen-Löslichkeitsparameter der Polymerkomponenten hinreichend voneinander unterscheiden, ausgedrückt durch die Unterschiedlichkeit "Z". Es hat sich herausgestellt, dass die Haftklebemassen in diesem Fall besonders Ink-resistent sind.

Eine in der Literatur bekannte Beschreibung von Löslichkeitsparametern geschieht durch die Verwendung des eindimensionalen Hildebrand-Parameters ($\delta$). Diese eindimensionalen $\delta$-Werte sind jedoch mit Fehlern behaftet, die bei polaren Verbindungen, wie Acrylaten oder solchen, die Wasserstoffbrückenbindungen eingehen können, wie bspw. Acrylsäure, meistens groß sind. Weil das Modell der eindimensionalen Hildebrand Löslichkeitsparameter somit nur begrenzte Anwendung findet, wurde es durch Hansen weiterentwickelt (Hansen Solubility Parameters: A User's Handbook, Second Edition; Charles M. Hansen; 2007 CRC Press; ISBN 9780849372483).

Die heutzutage daher vielfach verwendeten Hansen-Löslichkeitsparameter sind dreidimensionale Löslichkeitsparameter. Sie bestehen aus einem dispersen Anteil ($\delta_D$), einem Anteil aus polaren Wechselwirkungen ($\delta_P$) und einem Anteil für die Wasserstoffbrückenbindungen ($\delta_H$). Mit dem Hildebrand-Parameter $\delta$ hängen sie wie folgt zusammen:

$$\delta^2 = \delta_d^2 + \delta_p^2 + \delta_H^2$$

$\delta_d$, $\delta_p$ und $\delta_H$ können für Polyacrylate experimentell nicht direkt bestimmt, wohl aber über Inkrementsysteme berechnet werden. Eine gängige - auch in dieser Schrift angewendete - Methode ist die nach Stefanis/Panayiotou (Prediction of Hansen Solubility Parameters with a New Group-Contribution Method; Int. J. Thermophys. (2008) 29:568-585; Emmanuel Stefanis, Costas Panayiotou):

Zur Bestimmung der Hansen-Löslichkeitsparameter für die Polyacrylate werden die Löslichkeitsparameter der auf die einzelnen monomere zurückzuführenden Bausteine in den Polymeren, also die der Wiederholungseinheit in einer Polymerkette (ohne die polymerisierbare Doppelbindung, stattdessen eine kovalente sigma-Bindung wie sie in der Polymerkette vorliegt) gemäß der Vorschrift in der genannten Schrift berechnet. Dabei ist für jede Gruppe in dem Baustein jeweils ein bestimmter Wert für den dispersen Anteil ($\delta_D$), den polaren Wechselwirkungen ($\delta_P$) und den Wasserstoff-brückenbildungs-Anteil ($\delta_H$) tabelliert, siehe Prediction of Hansen Solubility Parameters with a New Group-Contribution Method; Int. J. Thermophys. (2008), Tables 3 bis 6, Seiten 578 bis 582.

Beispiele:

Polyacrylsäure enthält die Wiederholungseinheit

$-[-CH_2-CHCOOH-]_n-$ ;

nach dem Inkrementsystem von Stefanis/Panayiotou ergeben sich die Hansen Löslichkeitsparameter (eine $CH_2$-Gruppe, eine CH-Gruppe und eine COOH-Gruppe) für den entsprechenden Baustein zu $\delta_d$ = 17,7, $\delta_p$ = 8,6 und $\delta_H$ = 11,1. Polybutylacrylat enthält die Wiederholungseinheit

$-[-CH_2-CHCOO(CH_2)_3CH_3-]_n-$ ;

mit vier $CH_2$-Gruppen, einer CH-Gruppe, einer COO-Gruppe und einer $CH_3$-Gruppe ergeben sich die Hansen Löslichkeitsparameter für den entsprechenden Baustein zu $\delta_d$ = 17,1, $\delta_p$ = 8,6 und $\delta_H$ = 6,5.

Nach der Berechnung der Hansen-Löslichkeitsparameter der Monomer-Bausteine kann die Bestimmung der entsprechenden Hansen-Löslichkeitsparameter der Polyacrylate (Copolymere) erfolgen. Die Löslichkeitsparamater ($\delta_D$, $\delta_P$, $\delta_H$) für Acrylat-Copolymere werden ermittelt aus dem molaren Anteil der einzelnen Monomere (Bausteine), aus denen das Polyacrylat zusammengesetzt ist, wobei die jeweiligen Werte mit dem molaren Anteil des Monomer-Bausteins im Copolymer multipliziert wird und anschließend die anteiligen Parameter ($\delta_d$, $\delta_p$, $\delta_H$ für jedes Monomer) summiert werden.

Am Beispiel eines Polyacrylates bestehend aus 97 Gew.-% Butylacrylate und 3 Gew.-% Acrylsäure, was einer molaren Zusammensetzung von 84,8 mol-% Butylacrylat und 5,2 mol-% Acrylsäure entspricht, sei dies verdeutlicht.

| | $\delta_d$ | $\delta_p$ | $\delta_H$ |
|---|---|---|---|
| Butylacrylat ($\delta_d = 17,1$, $\delta_p = 8,6$ und $\delta_H = 6,5$) | 0,848 x 17,1 = 16,2 | 0,848 x 8,6 = 8,2 | 0,848 x 6,5 = 6,1 |
| Acrylsäure ($\delta_d$) = 17,7, $\delta_p = 8,6$ und $\delta_H = 11,1$) | 0,052 x 17,7 = 0,9 | 0,052 x 8,6 = 0,4 | 0,052 x 11,1 = 0,6 |
| + | | | |
| Polyacrylat | 17,1 | 8,6 | 6,7 |

Für homogen mischbare Polymergemische wird entsprechend vorgegangen: Die Hansen-Löslichkeitsparameter eines jeweiligen Polymers werden jeweils mit dem molaren Anteil dieses Polymers in der Polymerkomponente multipliziert und die anteiligen Werte dann aufaddiert, um zum jeweiligen Parameter der Polymerkomponente zu gelangen.

Die Unterschiedlichkeit zweier Polymerkomponenten 1 und 2 (beispielweise Polymerkomponenten A und B) wird in dieser Schrift durch den Parameter Z angegeben. Die Parameter $\delta_{d1}$, $\delta_{p1}$ und $\delta_{H1}$ von Polymerkomponente 1 werden jeweils von den entsprechenden Parametern $\delta_{d2}$, $\delta_{p2}$ und $\delta_{H2}$ der Polymerkomponente 2 subtrahiert. Von dem jeweiligen Differenzwert wird der absolute Betrag ermittelt und diese jeweils zu dem Gesamtfaktor Z aufaddiert:

$$Z = |\delta_{d1} - \delta_{d2}| + |\delta_{p1} - \delta_{p1}| + |\delta_{H1} - \delta_{H2}|$$

Für eine Reihe sehr geeigneter Monomere sind die jeweiligen Hansen-Löslichkeitsparameter in der im Anhang befindlichen Tabelle 3 aufgelistet, so dass die vorstehenden Werte für Polymerkomponenten mit daraus gebildeten Polymeren leicht zu ermitteln sind.

Erfindungsgemäß zu verwendende besonders bevorzugte Haftklebemassen zeichnen sich dadurch aus, dass die Unterschiedlichkeiten Z aller Komponenten zueinander jeweils mehr als den Wert 1 annehmen.

Ein weiterer Aspekt der Erfindung betrifft daher eine zu verwendende Haftklebemasse die - zunächst unabhängig betrachtet von der Frage der Phasenseparation - mindestens 60 Gew.-% (bezogen auf die Haftklebemasse) eines Polymerblends umfasst, wobei der Polymerblend aus einer ersten Polymerkomponente A, einer zweite Polymerkomponente B und gegebenenfalls einer oder mehreren weitere Polymerkomponenten (C, D, ...) besteht, wobei die erste Polymerkomponente A zu mindestens x Gew.-% (bezogen auf den Polymerblend) im Polymerblend vorliegt, wobei $90 \leq x \leq 99$, und wobei die zweite Polymerkomponente B und die gegebenenfalls vorhandenen weiteren Polymerkomponenten C, D, ... in Summe zu y Gew.-% (bezogen auf den Polymerblend) im Polymerblend vorliegen, wobei y = 100 - x, wobei jede Polymerkomponnete (A, B, C, ...) zu mindestens 60 Gew.-% auf (Meth)Acrylmonomere zurückzuführen ist, und wobei die Unterschiedlichkeit Z der Hansen-Löslichkeitsparameter jeder der Polymerkomponenten A, B, C, ... mit jeder der anderen Polymerkomponenten A, B, C... mindestens den Wert 1 annimmt.

Besonders bevorzugt gilt dabei als Folge der gewählten Unterschiedlichkeiten, dass keine der Polymerkomponenten (A, B, C, ...) bei Raumtemperatur mit einer der anderen Polymerkomponenten (A, B, C, ...) homogen mischbar ist, so dass ein Mehrphasensystem vorliegt.

## Detaillierte Beschreibung der Erfindung

Zusammensetzung des Polymerblends

Die erfindungsgemäß zu verwendende Haftklebemasse enthält einen Polymerblend mit zumindest zwei Polymerkomponenten - nämlich einer ersten Polymerkomponente A und einer zweiten Polymerkomponente B -, die jeweils aus einer oder mehreren Polymeren durch herkömmlich bekannte Polymerisationsverfahren - wie etwa freie radikalische Polymerisation oder kontrollierte radikalische Polymerisation - erhältlich sind. Grundsätzlich können die Monomere zur Herstellung der Polymere der Komponenten A und B - sowie der gegebenenenfalls vorhandenen weiteren Polymerkomponenten C, D, ... - aus demselben Monomerpool gewählt werden, mit der Maßgabe, dass die Auswahl derart geschieht, dass die Komponenten bei Raumtemperatur nicht homogen miteinander mischbar sind.

Die Polymere der Polymerkomponenten A, B, C, ... sind insbesondere solche Polymere auf Polyacrylatbasis, also solche Polymere, die zumindest überwiegend - insbesondere zu mehr als 60 Gew.-% - auf Acrylsäureestern und/oder Methacrylsäureestern, sowie gegebenenfalls deren freien Säuren, als Monomere (im Folgenden als "Acrylmonomere" bezeichnet) zurückzuführen sind. Polyacrylate sind bevorzugt durch freie radikalische Polymerisation erhältlich. Polyacrylate können gegebenenfalls weitere Bausteine auf Basis weiterer, nicht-acrylischer copolymerisierbarer Monomer enthalten.

Bei den Polyacrylaten kann es sich um Homopolymere und/oder insbesondere um Copolymere handeln. Die Bezeichnung "Copolymer" umfasst im Sinne dieser Erfindung sowohl solche Copolymere, in denen die bei der Polymerisation eingesetzten Comonomere rein statistisch eingebaut sind, als auch solche, bei denen Gradienten in der Comonomerzusammensetzung und/oder lokale Anreicherungen einzelner Comonomersorten sowie ganze Blöcke eines Monomers in den Polymerketten vorkommen. Auch alternierende Comonomerabfolgen sind denkbar.

Die Polyacrylate können beispielsweise von linearer, verzweigter, sternförmiger oder gepfropfter Struktur sein, und es kann sich um Homopolymere oder Copolymere handeln. Vorteilhaft liegt die mittlere Molmasse (Gewichtsmittel $M_W$) zumindest eines der Polyacrylate des Polyacrylat-Basispolymers, bei mehreren vorhandenen Polyacrylaten vorteilhaft des überwiegenden Gewichtsteils der Polyacrylate, insbesondere aller vorhandenen Poylacrylate im Bereich von 250 000 g/mol bis 10 000 000 g/mol, bevorzugt im Bereich von 500 000 g/mol bis 5 000 000 g/mol.

Besonders bevorzugt wird die Zusammensetzung der Polyacrylat-Komponente derart gewählt, dass die Polyacrylat-Komponente eine Glasübergangstemperatur (DDK, siehe unten) von nicht mehr als 0 °C, bevorzugt von nicht mehr als - 20 °C, sehr bevorzugt von nicht mehr als - 40 °C aufweist.

Die Glastemperatur von Copolymeren kann durch Wahl und mengenmäßige Zusammensetzung der eingesetzten Komponenten vorteilhaft derart gewählt, dass sich in Analogie zur *Fox*-Gleichung nach Gleichung G1

$$\frac{1}{T_G} = \sum_n \frac{w_n}{T_{G,n}} \qquad (G1)$$

ein geeigneter Glasübergangspunkt $T_G$ für das Polymer ergibt; mit
n = Laufzahl über die eingesetzten Monomere, $w_n$ = Massenanteil des jeweiligen Monomers n (Gew.-%) und $T_{G,n}$ = jeweilige Glasübergangstemperatur des Homopolymers aus den jeweiligen Monomeren n in K. Glasübergangstemperaturen von Homopolymeren können bis zu einer bestimmten oberen Grenzmolmasse von der Molmasse des Homopolymeren abhängen; die Bezugnahme auf Glasübergangstemperaturen von Homopolymeren in dieser Schrift erfolgt in Bezug auf solche Polymere, deren Molmassen oberhalb dieser Grenzmolmasse liegen, also im Glasübergangstemperatur-konstanten Bereich. Bestimmung des $T_G$ erfolgt nach Entfernung des Lösemittels im unvernetzten Zustand (in Abwesenheit von Vernetzern).

Analog kann die Gleichung G1 auch zur Bestimmung und Vorhersage der Glasübergangstemperatur von Polymergemischen angewendet werden. Dann gilt, sofern es sich um homogene Mischungen handelt,
n = Laufzahl über die eingesetzten Polymere, $w_n$ = Massenanteil des jeweiligen Polymeren n (Gew.-%) und $T_{G,n}$ = jeweilige Glasübergangstemperatur des Polymeren n in K. Durch Abmischung mit Klebharzen erhöht sich in der Regel die statische Glasübergangstemperatur.

Besonders vorteilhaft sind statistische Copolymere einsetzbar.

Zumindest eine Polymersorte der Polyacrylat-Komponente basiert vorteilhaft auf unfunktionalisierten $\alpha,\beta$-ungesättigten Estern. Werden diese für das zumindest eine Polymer in der Polyacrylat-Komponente mit Copolymercharakter verwendet, können als Monomere bei der Herstellung dieser zumindest einen Polymersorte prinzipiell alle dem Fachmann geläufigen Verbindungen, die sich zur Synthese von (Meth)acrylat(co)polymeren eignen, eingesetzt werden. Bevorzugt werden $\alpha,\beta$-ungesättigte Alkylester der allgemeinen Struktur

$$CH_2=C(R^1)(COOR^2) \qquad (I)$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Zumindest eine Sorte Monomere für die Polyacrylate der Polyacrylat-Komponente der vorteilhaften erfindungsgemäß zu verwendenden Klebemasse sind solche, deren Homopolymer eine Glasübergangstemperatur $T_G$ von nicht mehr als 0 °C, sehr bevorzugt höchstens - 20 °C aufweist. Dies sind insbesondere Ester der Acrylsäure mit linearen Alkoholen mit bis 10 C-Atomen oder verzweigten Alkoholen mit mindestens 4 C-Atomen und Ester der Methacrylsäure mit linearen Alkoholen mit 8 bis 10 C-Atomen oder verzweigten Alkoholen mit mindestens 10 C-Atomen. Des Weiteren können zusätzlich Monomere zum Einsatz kommen, deren Homopolymer eine Glasübergangstemperatur $T_G$ von mehr als 0 °C aufweist. Als spezifische Beispiele werden bevorzugt ein oder mehrere Mitglieder gewählt aus der Gruppe umfassend

Methylacrylat, Methylmethacrylat, Ethylacrylat, n-Propylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, n-Nonylmethacrylat, n-Decylacrylat, n-Decylmethacrylat, Isobutylacrylat, Isopentylacrylat, Isooctylacrylat, Isooctylmethacrylat, die verzweigten Isomere der vorgenannten Verbindungen, wie zum Beispiel 2-Ethylhexylacrylat, 2-Ethylhexylmethacrylat, 2-Propylheptylacrylat.

Weiterhin können Monomere mit der Neigung zur Ausbildung teilkristalliner Bereiche im Polymer gewählt werden. Dieses Verhalten wird festgestellt für Acrylsäureester und Methacrylsäureester mit einem linearen Alkylrest mit mindestens 12 C-Atomen im Alkoholrest, bevorzugt von mindestens 14 C-Atomen im Alkoholrest. Hier lassen sich erfindungsgemäß besonders vorteilhaft beispielsweise Stearylacrylat und/oder Stearylmethacrylat einsetzen.

Weitere vorteilhaft einsetzbare Monomere sind monofunktionelle Acrylate und/oder Methacrylate von überbrückten Cycloalkylalkoholen mit zumindest 6 C-Atomen im Cycloalkylalkoholrest. Die Cycloalkylalkohole können auch substituiert sein, z.B. durch $C_1$- bis $C_6$-Alkylgruppen, Halogenatome oder Cyanogruppen. Spezifische Beispiele sind Cyclohexylmethacrylate, Isobornylacrylat, Isobornylmethacrylat und 3,5-Dimethyladamantylacrylat.

Zur Variation der Glasübergangstemperatur können zur Herstellung der Polyacrylate auch zu einem Teil solche Comonomere eingesetzt werden, deren Homopolymere eine hohe statische Glasübergangstemperatur besitzen. Als Komponenten eigenen sich aromatische Vinylverbindungen, wie z.B. Styrol, wobei bevorzugt die aromatischen Kerne $C_4$- bis $C_{18}$-Bausteine umfassen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Als Comonomere zu den Acrylmonomeren lassen sich auch weitere mit Acrylmonomeren copolymerisierbare Monomere einsetzen, zum Beispiel in einem Anteil von bis zu 40 Gew.-%. Solche Comonomere können prinzipiell alle mit den Acrylaten verträglichen Verbindungen mit copolymerisierbaren Doppelbindungen sein, wie etwa Vinylverbindungen. Solche Vinylverbindungen können ganz oder teilweise gewählt werden aus der Gruppe umfassend Vinylester, Vinylether, Vinylhalogenide, Vinylidenhalogenide, Vinylverbindungen mit aromatischen Cyclen und Heterocyclen, ins-besondere in $\alpha$-Stellung zur Doppelbindung. Besonders bevorzugt geeignete Comonomere sind beispielsweise Vinylacetat, Vinylformamid, Vinylpyridin, Ethylvinylether, Vinylchlorid, Vinylidenchlorid, Acrylonitril.

Aber auch andere mit Acrylmonomeren copolymerisierbare Verbindungen sind hier einsetzbar.

Zur effektiven Vernetzung ist es insbesondere von Vorteil, wenn zumindest ein Teil der Polyacrylate funktionelle Gruppen aufweisen, mit denen die erfindungsgemäß eingesetzten Vernetzer zur Reaktion kommen können. Bevorzugt werden hierfür Monomere mit Säuregruppen eingesetzt, wie beispielsweise Acrylsäure-, Sulfonsäure- oder Phosphonsäuregruppen, oder mit Säureanhydridbausteinen.

Besonders bevorzugte Beispiele für Monomere für Polyacrylate sind Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäu-re, Vinylessigsäure, Vinylphosphonsäure, Maleinsäureanhydrid.

Vernetzung

Ein weiteres Kriterium für die Eignung als Haftklebemasse ist die Kohäsion. Üblicherweise muss die Polymermasse eine hinreichende Kohäsion aufweisen, um bei der Verklebung die Haftung vermitteln zu können und nicht aus der Klebefügung zu fließen. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, eingestellt, vergrößert und/oder verschoben werden. Der Anwendungsbereich der Haftklebemassen kann somit durch eine Einstellung zwischen Fließfähigkeit und Kohäsion der Masse optimiert werden.

Besonders bevorzugt wird derart vorgegangen, dass zumindest die Matrixkomponente - insbesondere gebildet durch die erste Polymerkomponente A - vernetzt wird. Die Domänen der weiteren Polymerkomponenten - insbesondere der zweiten Polymerkomponente B, gegebenenfalls auch der gegebenenfalls vorhandenen weiteren Polymerkomponenten - können ebenfalls vernetzt, aber auch unvernetzt vorliegen, und zwar jeweils unabhängig vom Vernetzungszustand der weiteren vorhandenen Polymerkomponenten.

Um die optimalen Eigenschaften der erfindungsgemäß zu verwendenden Haftklebemasse zu erhalten, sollte diese sehr bevorzugt vernetzt werden. Wie vorstehend bereits dargestellt ist es vorteilhaft, wenn zumindest die Matrix-Polymerkomponente vernetzt wird, alternativ oder zusätzlich können jedoch auch die weiteren (als Domänen vorliegenden) Polymerkomponenten vernetzt werden, und zwar jeweils unabhängig von den gegebenenfalls vorhandenen weiteren Polymerkomponenten.

Die erfindungsgemäß zu verwendende Haftklebemasse ist für den Einsatz für die Verklebung von Druckklischees auf Druckzylindern und -hülsen, insbesondere als Klebemassenschicht eines Klebebandes auf der Seite, die dem Druckzylinder bzw. der -hülse zugewandt ist (also bei der Verklebung mit diesen Untergründen in Kontakt steht), insbesondere geeignet, wenn ihr Mikroscherweg - in Bezug auf die Scherung in 15 min bei 40 °C eines anfänglich 13 mm x 10 mm großen Flächenstückes der ausgestrichenen Haftklebemasse mit einer Dicke entsprechend einem Flä-chengewicht von 50 g/m$^2$, bei Belastung mit 1,0 N in Richtung der größeren Längenausdehnung gemäß Methode F - zwischen 100 $\mu$m und 300 $\mu$m liegt. Die besten Eigenschaften hat die erfindungsgemäß zu verwendende Klebemasse bei einem Vernetzungszustand, der einem Mikroscherweg in Betreff auf den oben angegebenen Bezug zwischen 125 $\mu$m und 250 $\mu$m entspricht.

Die vorgenannten Werte können gut eingestellt werden durch Einsatz eines geeigneten Vernetzers in einer wohldefinierten Menge, insbesondere bei einer nahezu vollständig ablaufenden Vernetzungsreaktion.

Durch Zugabe geeigneter thermischer Vernetzer ist die erfindungsgemäß zu verwendende Haftklebemasse vorteilhaft thermisch vernetzbar, somit kann auf den Zusatz von aktinisch aktivierbaren Vernetzern, wie beispielsweise durch ultraviolettes Licht aktivierbare Vernetzer (UV-Vernetzer), verzichtet werden. Die thermische Vernetzung kann unter für die Haftklebemasse wesentlich milderen Bedingungen durchgeführt werden, da die Einwirkung der auch zerstörend wirkenden Strahlen vermieden werden kann.

Sofern dies im Einzelfall gewünscht ist, ist es jedoch auch möglich, eine Vernetzung ausschließlich oder zusätzlich durch die Bestrahlung mit aktinischer Strahlung zu bewirken, wobei gegebenenfalls erforderliche oder fördernde Vernetzersubstanzen zugesetzt werden können (z.B. UV-Vernetzer).

In der Regel enthält die erfindungsgemäß zu verwendende Haftklebemasse somit thermische Vernetzer, also solche Substanzen, die unter dem Einfluss thermischer Energie eine Vernetzungsreaktion ermöglichen (initiieren) und/oder fördern.

Die Einstellung des Vernetzungszustandes - insbesondere auf die oben genannten bevorzugten Bereiche - kann beispielsweise geschehen durch die Verwendung kovalent reagierender Vernetzer, insbesondere von Epoxiden, Isocyanaten und/oder Aziridinen, und/oder durch die Verwendung koordinativer Vernetzer, insbesondere von Metallchelaten, bevorzugt von Aluminiumchelat.

Metallchelate, wie insbesondere Aluminiumchelate, etwa in Form von Aluminium(III)-acetylacetonat, werden zur Erzielung des oben genannten Vernetzungszustandes bevorzugt in einer Menge von 0,15 bis 0,35 Gew.-Teilen, besonders bevorzugt von 0,2 bis 0,3 Gew.-Teilen, jeweils bezogen auf 100 Gew.-Teile der Polymerkomponente (lösemittelfrei) eingesetzt.

Weitere sehr geeignete thermische Vernetzer sind beispielsweise Epoxide enthaltend tertiäre Aminfunktionen, wie insbesondere Tetraglycidyl meta-Xylendiamin (N,N,N',N'-Tetrakis(oxiranylmethyl)-1,3-benzendimethanamin). Diese Verbindungen werden bevorzugt in einer Menge von 0,03 bis 0,1 Gew.-Teile, besonders bevorzugt von 0,04 bis 0,07 Gew.-Teile, beispielsweise 0,06 Gew.-Teile, wiederum jeweils bezogen auf 100 Gew.-Teile der Polymerkomponente (lösemittelfrei) eingesetzt, um den oben definierten Vernetzungszustand zu erzielen.

Vorteilhaft wird derart vernetzt, dass die Vernetzungsreaktion möglichst vollständig abläuft. Hierzu ist es günstig, wenn mindestens 85 Gew.-%, bevorzugt mindestens 90 Gew.-% des Vernetzers während der Vernetzungsreaktion umgesetzt werden. Bei einer entsprechenden Umsetzung der Vernetzungsreaktion konnten der oben definierte Vernetzungszustand der Haftklebemasse jeweils realisiert werden.

Die Herstellung einer vernetzten Haftklebemasse erfolgt dabei in einer vorteilhaften Vorgehensweise derart, dass zunächst durch radikalische Polymerisationen die Polymere der jeweiligen Polymerkomponente aus den entsprechend zugrundeliegenden Monomermischungen hergestellt werden. Diese Polymerkomponenten werden anschließend innig vermischt. Während oder bevorzugt nach der Polymerisation wird zumindest ein thermischer Vernetzer, insbesondere ein oder mehrere der oben aufgeführten Vernetzer, ganz besonders bevorzugt Aluminium(III)-acetylacetonat oder Tetraglycidyl meta-Xylendiamin zugesetzt, insbesondere in den oben angegebenen jeweiligen Mengen. Sofern - wie nachstehend dargestellt für die erfindungsgemäße Haftklebemasse aber in der Regel nicht erforderlich - weitere Additive zugesetzt werden sollen, werden diese ebenfalls beigemischt.

Die mit dem Vernetzer vermischte Haftklebemasse wird durch Zufuhr thermischer Energie so weitgehend vernetzt, dass ihr Vernetzungszustand einem Mikroscherweg im Bereich von 100 $\mu$m bis 300 $\mu$m, vorzugsweise im Bereich von 125 $\mu$m bis 250 $\mu$m entsprach (Bezug siehe oben).

Vorteilhafte Ausführungen der Erfindung

In besonders bevorzugter Ausführung wird der Polymerblend ausschließlich aus den Polymerkomponenten A und B gebildet, so dass ein Zweiphasensystem vorliegt. Die erste Polymerkomponente A kann durch ein einziges Polymer gebildet werden, dass ein Homopolymer, aber auch ein Copolymer sein kann, insbesondere polymerisiert aus den in dieser Schrift genannten Monomeren.

Alternativ kann die erste Polymerkomponente A ein homogenes Gemisch zweier oder mehrerer Polymere sein, also aus mehreren miteinander mischbaren Polymeren bestehen, die unabhängig voneinander jeweils Homo- oder Copolymere sein können. Eines, einige oder bevorzugt alle dieser Polymer sind vorteilhaft auf die in dieser Schrift genannten Monomere zurückzuführen.

Die zweite Polymerkomponente B kann durch ein einziges Polymer gebildet werden, dass ein Homopolymer, aber auch ein Copolymer sein kann, insbesondere polymerisiert aus den in dieser Schrift genannten Monomeren.

Alternativ kann die zweite Polymerkomponente B ein homogenes Gemisch zweier oder mehrerer Polymere sein, also aus mehreren miteinander mischbaren Polymeren bestehen, die unabhängig voneinander jeweils Homo- oder Copolymere sein können. Eines, einige oder bevorzugt alle dieser Polymer sind vorteilhaft auf die in dieser Schrift genannten Monomere zurückzuführen.

In einer besonderen Ausführung werden die erste Polymerkomponente A sowie die zweite Polymerkomponente B jeweils durch ein einziges Copolymer auf Acrylatbasis gebildet wird, die insbesondere derart zusammengesetzt sind, dass sie die Vorgaben für die Haftklebemasse erfüllen.

In einer weiteren besonderen Ausführung stellt die erste Polymerkomponente A eine homogene Mischung zweier oder mehrerer Copolymere auf Acrylatbasis dar, während die zweite Polymerkomponente B durch ein einziges Copolymer auf Acrylatbasis gebildet wird. Die Polymerkomponenten sind insbesondere derart zusammengesetzt, dass sie die Vorgaben für die Haftklebemasse erfüllen.

Auch die gegebenenfalls vorhandenen weiteren Polymerkomponenten C, D, ... können unabhängig voneinader jeweils durch ein einziges Homo- oder Copolymer oder durch eine homogene Polymermischung realisiert werden. Das für die zweite Polymerkomponente B vorstehend gesagte gilt jeweils entsprechend.

Beimischungen

In bevorzugter Weise ist bereits die Polymerkomponente als solche - ohne wesentliche Anteile an weiteren Bestandteilen - haftklebrig. Der Polymerblend macht mindestens 60 Gew.-% der Haftklebemasse aus.

In bevorzugter Vorgehensweise macht der Polymerblend mindestens 98 Gew.-%, besonders bevorzugt mehr als 99,9 Gew.-% an der Zusammensetzung der Haftklebemasse, abzüglich des vorhandenen Vernetzers, aus (also bezogen auf alle Bestandteile der Haftklebemasse mit Ausnahme des bzw. der Vernetzer, da dieser üblicherweise vorliegt und für die Betrachtung der Additivfreiheit daher außer Betracht bleiben soll). Sehr bevorzugt wird ein Wert von 100 Gew.-% gewählt (unbeschadet der Anwesenheit von Vernetzern; wie unmittelbar zuvor beschrieben).

Üblicherweise umfassen Haftklebemassen aber herstellungsbedingt einen geringen Anteil an Verunreinigungen, nicht umgesetzten Monomeren oder dergleichen.

In vorteilhafter Ausführung ist die erfindungsgemäß zu verwendende Haftklebemasse harzfrei und/oder - unbeschadet der Anwesenheit oder Abwesenheit von Vernetzern (siehe oben) - frei von anderen Additiven.

Zur Feinjustierung der Haftklebeeigenschaften oder als beitragende Komponente zu einer Vernetzungs- oder Härtungsreaktion sind Haftklebemassen häufig Harze beigemischt (klebrigmachende Harze, Reaktivharze). Die erfindungsgemäß zu verwendende Haftklebemasse kann dementgegen hervorragend ohne die Beimischung von Harzen realisiert werden, ohne dass dies einen nachteiligen Einfluss auf ihre Eignung für den genannten Einsatzzweck hätte. Dabei kann sowohl auf klebrigmachende, auf thermoplastische als auch auf ReaktivHarze verzichtet werden. Insbesondere führt die Abwesenheit von Harzen zu einer besonders rückstandfreien Substratoberfläche nach der Demontage des Klebebandes, beispielsweise zu besonders rückstandsfreien Druckzylindern beziehungsweise Druckhülsen, nachdem das zuvor verklebte erfindungsgemäße Haftklebeband wieder entfernt wurde.

Als Harze werden im Rahmen dieser Schrift insbesondere solche oligo- und (niedrig)polymeren Verbindungen angesehen, deren zahlenmittlere Molmasse $M_n$ nicht mehr als 5.000 g/mol beträgt. Selbstredend werden kurzkettige Polymerisationsprodukte, die bei der Polymerisation der oben definierten Monomermischung zur Herstellung der Polymerkomponente der erfindungsgemäß zu verwendenden Haftklebemasse entstehen, nicht unter den Begriff "Harze" subsumiert.

Klebrigmachende Harze - auch als Klebharze bezeichnet - haben häufig Erweichungspunkte im Bereich von 80 bis 150 °C, ohne sich bei der Definition auf diese Spanne einschränken zu wollen. Die Angaben zum Erweichungspunkt $T_E$ von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung). Die Messungen erfolgen im Glycerolbad. Solche Harze, auf die bei der erfindungsgemäßen Haftklebemasse verzichtet werden kann, sind beispielsweise natürliche und/oder synthetische Harze, wie Pinen- und Indenharze, Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatischaromatische Kohlenwasserstoffharze, um nur einige zu nennen.

Als Reaktivharze werden solche Harze verstanden, die funktionelle Gruppen derart aufweisen, dass sie weiteren Bestandteilen der Haftklebemasse - wie beispielsweise den Makromolekülen der Polymerkomponente oder anderen Reaktivharzen - unter geeigneter Aktivierung reagieren könnten.

Sofern dies gewünscht ist, können der erfindungsgemäß zu verwendenden in einer alternativen Vorgehensweise aber auch Klebharze und/oder Reaktivharze beigemischt sein.

Zur Optimierung der erfindungsgemäß zu verwendenden Haftklebemasse können zudem die dem Fachmann für den jeweiligen Zweck jeweils geläufigen Additive zugesetzt werden. Ein Vorteil der erfindungsgemäß zu verwendenden Haftklebemasse ist es aber, insbesondere auch - abgesehen von den gesondert diskutierten Vernetzern - additivfrei hervorragend für den genannten Einsatzzweck geeignet zu sein. Auf die Anwesenheit von weiteren Additiven - unbeschadet der Anwesenheit oder Abwesenheit von Vernetzern - kann somit verzichtet werden, ohne dass dies nachteilige Auswirkungen auf die vorteilhaften Eigenschaften der Haftklebemasse hätte. So kann insbesondere auf die Beimischung von Additiven wie Weichmachern, Füllmaterialien, funktionellen Zusatzstoffen zur Erzielung bestimmter physikalischer Eigenschaften (wie elektrisch leitfähige Füllmaterialien, thermisch leitfähige Füllmaterialien und dergleichen), Flammschutzmitteln (wie beispielsweise Ammoniumpolyphosphat und dessen Derivate) und dergleichen verzichtet werden.

Die erfindungsgemäß zu verwendenden Klebemassen sind zur lösbaren Befestigung flexibler Druckplatten besonders geeignet, da sich die Druckplatten mit ihrer Hilfe zum einen gut und sicher fixieren lassen, zum anderen das Ablösen problemlos möglich ist, und zwar auch wenn die Druckplatten mit Lösungsmittel gereinigt wurden, das durch Druckfarbreste verunreinigt ist.

Verfahren zur Herstellung

Ein weiterer Aspekt betrifft ein erstes Verfahren zur Herstellung einer Haftklebemasse, wobei mit einer ersten Polymerkomponente A zumindest eine zweite Polymerkomponente B und gegebenenfalls eine oder mehrere weitere Polymerkomponenten (C, D, ...) innig vermischt werden, so dass ein Polymerblend entsteht, der mindestens 60 Gew.-% der Haftklebemasse ausmacht, wobei die erste Polymerkomponente A zu mindestens x Gew.-% im Polymerblend vorliegt, wobei $90 \leq x \leq 99$, wobei die zweite Polymerkomponente B und die gegebenenfalls vorhandenen weiteren Polymerkomponenten C, D, ... in Summe zu y Gew.-% im Polymerblend vorliegen, wobei y = 100 - x, wobei jede Polymerkomponnete (A, B, C, ...) zu mindestens 60 Gew.-% auf (Meth)Acrylmonomere zurückzuführen ist, und wobei keine der Polymerkomponenten (A, B, C, ...) bei Raumtemperatur mit einer der anderen Polymerkomponenten (A, B, C, ...) homogen mischbar ist, so dass ein Mehrphasensystem entsteht.

Ein weiteres Verfahren zur Herstellung einer Haftklebemasse zeichnet sich dadurch aus, dass mit einer ersten Polymerkomponente A zumindest eine zweite Polymerkomponente B und gegebenenfalls eine oder mehrere weitere Polymerkomponenten (C, D, ...) innig vermischt werden, so dass ein Polymerblend entsteht, der mindestens 60 Gew.-% der Haftklebemasse ausmacht, wobei die erste Polymerkomponente A zu mindestens x Gew.-% im Polymerblend vorliegt, wobei $90 \leq x \leq 99$, wobei die zweite Polymerkomponente B und die gegebenenfalls vorhandenen weiteren Polymerkomponenten C, D, ... in Summe zu y Gew.-% im Polymerblend vorliegen, wobei y = 100 - x, wobei jede Polymerkomponnete (A, B, C, ...) zu mindestens 60 Gew.-% auf (Meth)Acrylmonomere zurückzuführen ist. Bei diesem Verfahren umfasst jede Polymerkomponente (A, B, C, ...) solche Polymere, die jeweils durch Polymerisation von Monomeren erhalten werden, wobei die Zusammensetzung der Monomere für die Polymere jeder Polymerkomponente derart ausgewählt werden, dass die Unterschiedlichkeit Z der Hansen-Löslichkeitsparameter jeder der Polymerkomponenten A, B, C, ... mit jeder der anderen Polymerkomponenten A, B, C... mehr als den Wert 1 annimmt.

Besonders bevorzugt führt die Durchführung dieses Verfahrens eben zu einer solchen Haftklebemasse, bei der keine der Polymerkomponenten (A, B, C, ...) bei Raumtemperatur mit einer der anderen Polymerkomponenten (A, B, C, ...) homogen mischbar ist, so dass ein Mehrphasensystem entsteht.

Die vorgenannten Verfahren sind hervorragend nutzbar, um die erfindungsgemäß zu verwendende Haftklebemasse in seinen Grundformen oder in seinen vorteilhaften Ausgestaltungen, wie sie im Rahmen dieser Schrift genannt wurden, herzustellen.

Verwendung

Gegenstand der Erfindung ist die Verwendung einer Haftklebemasse - einschließlich jede ihrer Ausgestaltungen zum Verkleben von Druckplatten auf

insbesondere gekrümmten Oberflächen.

Die Druckplatte kann vorteilhaft eine solche aus einer Polyethylenterephthalat-Folie sein, auf die zumindest eine Schicht eines Fotopolymers aufgebracht ist.

Die Oberfläche, auf der die Druckplatte verklebt wird, besteht beispielsweise aus Stahl, Polyurethan oder aus einem Glasfaser-Harz-Material.

Die erfindungsgemäße Verwendung bezieht sich insbesondere auf die Verklebung einer Druckplatte auf solche Oberflächen, die Teil eines Druckzylinders oder eines Drucksleeves sind.

Besonders geeignet ist die Haftklebemasse - einschließlich jede ihrer Ausgestaltungen zur Verwendung in Druckprozessen unter Verwendung von celluslosenitrathaltigen Druckfarben, und dort, wie vorstehend dargestellt, insbesondere für die Verklebung von Druckplatten auf gekrümmten Oberflächen, wie beispielweise auf Drucksleeves oder Druckzylinern..

Die erfindungsgemäß zu verwendende Haftklebemasse ist geeignet zur sicheren Verklebung auf gängigen Materialien und zeichnet sich aus durch eine gute rückstandsfreie Wiederablösbarkeit. Dieses Verhalten zeigt sie insbesondere auch für sehr polare Untergründe, von denen Klebemassen gemäß des Standes der Technik, insbesondere nach längerer Verklebungsdauer, regelmäßig nicht ohne das Zurückbleiben von Rückständen wieder gelöst werden können.

Eine sehr gute Reversibilität, also rückstandsfreie Wiederablösbarkeit, konnte selbst für Untergründe festgestellt werden, deren Oberflächenenergie 45 mN/m oder mehr beträgt, insbesondere sogar für Materialien mit Oberflächenenergien im Bereich von 48 mN/m oder mehr, wie beispielweise Stahl, das nach Literaturangaben den Wert 50 mN/m aufweist.

Gegenstand der Erfindung sind weiterhin die Verwendung der Haftklebemasse als Klebemassenschicht für Haftklebebänder, insbesondere für doppelseitig klebende Haftklebebänder sowie die entsprechenden Haftklebebänder umfassend eine Schicht der erfindungsgemäßen Haftklebemasse, und die entsprechenden Klebebänder an sich. Solche Klebebänder können insbesondere mit einem Träger, ggf. weiteren Schichten und zwei außenliegenden Klebemassenschichten ausgerüstet sein, die wiederum temporär - zur besseren Handhabung, Lagerung und Anbietung - auf einer oder beiden Haftklebemassenschichten mit einem temporären Abdeckmaterial - auch als Liner bezeichnet - versehen sein können. Bei derartigen doppelseitig haftklebend ausgerüsteten Klebebändern können beide Klebemassenschichten aus der erfindungsgemäßen Haftklebemasse gebildet sein - und insbesondere in ihrer Zusammensetzung und/oder ihrer Dicke und/oder ihrem Vernetzungszustand identisch sein -, oder es kann eine der Klebemassenschichten durch eine erfindungsgemäß zu verwendende Haftklebemasse realisiert sein, während die andere Klebemassenschicht aus einer anderen Haftklebemasse gewählt wird, die optimal auf das entsprechend zu verklebende Substrat abgestimmt sein kann. Als Trägermaterialien für die Haftklebebänder eignen sich die dem Fachmann geläufigen und üblichen Folien, wie zum Beispiel Polyester, Polyethylenterephthalat (PET), Polyethylen (PE), Polypropylen (PP), biaxial orientiertes Polypropylen (BOPP), monoaxial orientiertes Polypropylen (MOPP), Polyurethan (PU), Polyvinylchlorid (PVC) und so weiter, wobei diese Materialien auch jeweils als geschäumte Schicht eingesetzt werden können. Als Träger können auch Verbunde aus mehreren Schichten - beispielsweise einer Folienschicht und einer Schaumschicht - eingesetzt werden.

Es sei darauf hingewiesen, dass die erfindungsgemäß zu verwendende Haftklebemasse auch als Klebemassenschicht anderer Klebebänder, beispielsweise einschichtiger, trägerloser Klebebänder ("Transferklebebänder"), die aus der Klebemassenschicht bestehen, einsetzbar ist.

Wie beschrieben kann die erfindungsgemäß zu verwendende Haftklebemasse hervorragend zum Verkleben flexibler Druckplatten auf gekrümmten Oberflächen, insbesondere zum Verkleben von Druckplatten oder Klischees mit Druckhülsen oder Druckzylindern, eingesetzt werden, insbesondere als Klebemassenschicht eines Haftklebebandes. Die besondere Eignung der erfindungsgemäß zu verwendenden Haftklebemasse für die reversible Verklebung auf Kunststoff (siehe oben) macht diese für die Verklebung auf Druckplatten bzw. - Klischees aus diesem Material besonders geeignet. Da die Klebemasse gute Eigenschaften auch auf anderen Materialien besitzt, können die entsprechenden Haftklebebänder sehr flexibel eingesetzt werden, auch bei der Verwendung im Flexodruck. So kann die erfindungsgemäße Haftklebemasse als Klebemassenschicht doppelseitiger Haftklebebänder zum Einsatz kommen, wobei die erfindungsgemäß zu verwendende Haftklebemasse die während der Verklebung zur Druckplatte bzw. zum Klischee gerichtete Klebemassenschicht darstellt. Insbesondere werden doppelseitige Haftklebebänder eingesetzt, wie sie vorstehend beschrieben sind. Als Trägermaterial wird dabei vorteilhaft ein geschäumtes Flächengebilde verwendet, zum Beispiel eine Polymerschaumschicht. So lassen sich insbesondere geschäumte Polyolefine - wie Polyethylen und Polypropylen - einsetzen, besonders bevorzugt ist ein Polyethylen/Ethylenvinylacetat-Schaum. Weiterhin können beispielhaft geschäumte Polyurethane oder geschäumte Polyvinylchloride eingesetzt werden. Generell kann durch eine Aufrauhung oder anderweitige Vorbehandlung des Trägermaterials eine Verbesserung der Haftklebemassenverankerung vorgenommen werden. Ein Weg zur Aufrauhung und zur chemischen Modifizierung der Polymerstruktur verläuft über die nasschemische Ätzung des Trägermaterials. Neben der Ätzung kann auch auf andere Weise vorbehandelt werden. So lassen sich zur Verbesserung der Verankerung die Trägermaterialien physikalisch und chemisch vorbehandeln. Zur physikalischen Behandlung wird die Folie bevorzugt mit Flamme oder Corona oder Plasma behandelt. Für die chemische Vorbehandlung wird das Trägermaterial mit Vorstrich versehen, wobei in einer besonders bevorzugten Auslegung Reaktiv-Vorstriche verwendet werden. Als Vorstrichmaterialien eignen sich z.B. Reaktivprimer.

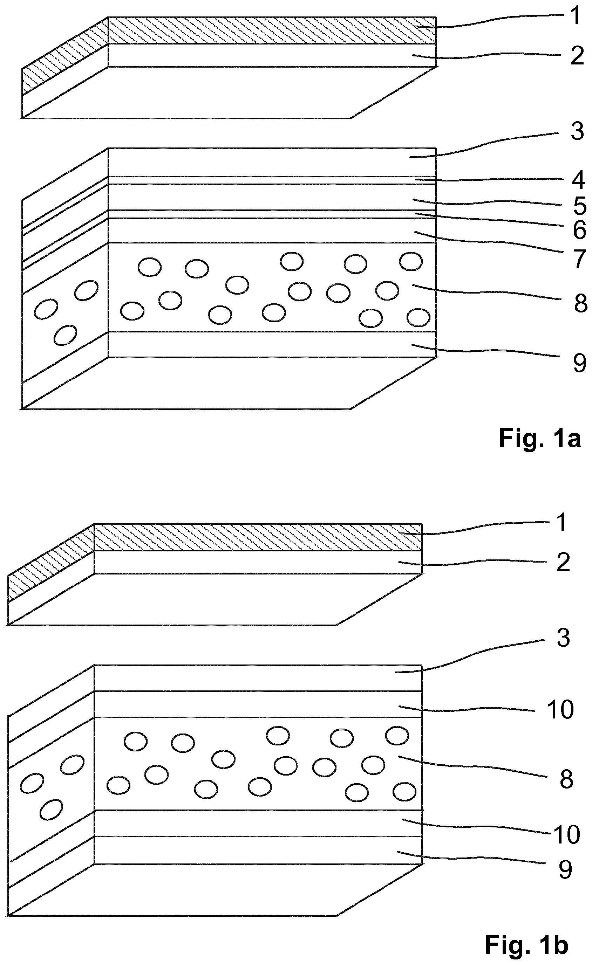

Der Aufbau der Klebebänder entspricht dabei in sehr bevorzugten Ausgestaltungen einer Schichtenfolge, wie sie in den Fig. 1a und 1b wiedergegeben sind. Dabei wird die erfindungsgemäße Haftklebemasse besonders bevorzugt im Sinne der Klebemassenschicht 9, also der bei der Anwendung zum Druckzylinder oder zur Druckhülse gewandten Klebemassenschicht, eingesetzt, da sie für diesen Einsatzzweck optimiert ist.

Aufgrund des großen Einsatzspektrums der erfindungsgemäß zu verwendenden Haftklebemasse ist diese auch für die Klebeschicht geeignet, die mit dem Druckklischee in Kontakt steht.

Das Klebeband dient vorteilhaft zum Verkleben eines Klischees, das sich aus einer PET-Folie 2 und einer Schicht eines Fotopolymers 1 zusammensetzt. Die Schichten 3 und 9 bilden die außenliegenden Klebemassenschichten eines doppelseitig klebend ausgerüstetes Klischeeklebeband, das dank seiner Träger-Schaumschicht 8 kompressibel und elastisch ist. Dabei kann die erfindungsgemäß zu verwendende Haftklebemasse entweder für Schicht 3, oder für Schicht 9, oder besonders vorteilhaft für beide Schichten 3 und 9 eingesetzt werden.

In den Figuren 1a und 1b bedeuten:

3    Haftklebemasse zur Verankerung des Klischees

4    die vorbehandelte - insbesondere geätzte oder coronabehandelte - obere Oberfläche der PET-Folie 5

5    Folie aus Polyethylenterephthalat (PET)

6    die vorbehandelte - insbesondere geätzte oder coronabehandelte - untere Oberfläche der PET-Folie 5

7    Klebemasse - insbesondere Haftklebemasse - zur Verankerung der Träger-Schaumschicht 8 auf der PET-Folie 5

8    Träger-Schaumschicht, z.B. Polyethylen/Ethylenvinylacetat-Schaum

9    Haftklebemasse zur Verankerung auf dem Druckzylinder

10   Polyethylen-Befilmung der Träger-Schaumschicht 8 (beidseitig)

Gerade in der Druckindustrie ist es von Bedeutung, dass die hier eingesetzten Klebebänder eine hohe Flexibilität aufweisen, also in gewissem Maße bei Druckanwendung ihre Dicke verändern können beziehungsweise nach Wegnahme der Belastung wieder ihre ursprüngliche Form annehmen können.

Vorteilhaft ist darüber hinaus, wenn der Träger-Schaumschicht 8 aus Polyolefin(en), Polyvinylchlorid oder Polyurethan besteht. In einer besonders bevorzugten Auslegung werden geschäumte Polyethylene und/oder Polypropylene eingesetzt. Weiter bevorzugt ist, wenn die Oberflächen der Träger-Schaumschicht 8 physikalisch vorbehandelt sind, wobei die physikalische Methode zur Vorbehandlung insbesondere gewählt wird aus der Gruppe Coronavorbehandlung, Flammvorbehandlung oder Plasmabehandlung.

Von Vorteil sind alternativ oder zusätzlich die Oberflächen der PET-Folie 5 und/oder der Polyethylen-Filme 10 physikalisch vorbehandelt.

Die üblicherweise als "Coronavorbehandlung" bezeichnete physikalische Vorbehandlungstechnik ist meist eine "dielektrische Barrierenentladung" (engl. *dielectric barrier discharge,* DBD), bei der mittels hochfrequenter Wechselspannung Hochspannungsentladungen erzeugt werden. Dabei wird das zu behandelnde Substrat bahnförmig zwischen zwei Hochspannungselektroden durchgeführt, wobei mindestens eine Elektrode aus einem dielektrischen Material besteht oder damit beschichtet ist. Das zu behandelnde Material wird dabei direkt den elektrischen Entladungen ausgesetzt oder zumindest dem durch die Entladungen erzeugten reaktiven Gas. Die elektrischen Entladungen werden oft als "Coronaentladungen" bezeichnet.

Die Coronavorbehandlung als Methode zur Oberflächenvorbehandlung von Trägern wird vielfach industriell eingesetzt. Als Prozessgas dient üblicherweise die Umgebungsluft. Die Verwendung anderer Prozessgase als Luft wie zum Beispiel Stickstoff, Kohlendioxid oder Edelgase ist ebenfalls als Stand der Technik bekannt.

Alternativ kann die dem Träger zugewandte Oberfläche der Haftklebemassenschicht 9 physikalisch vorbehandelt werden, insbesondere durch Coronavorbehandlung, Flammvorbehandlung oder Plasmabehandlung, um die Verbundfestigkeit zwischen der Haftklebemassenschicht und dem Träger zu verbessern. Die physikalische Behandlung der Haftklebemasse kann ebenfalls vorteilhaft in Luft als Prozessgas durchgeführt werden, es können aber als Prozessgase zum Beispiel Stickstoff, Kohlendioxid oder Edelgase verwendet werden. Als vorteilhaft haben sich zum Beispiel Stickstoff oder ein Gemisch aus Luft und Stickstoff herausgestellt.

Zur Erhöhung der Klebkraft zwischen der Haftklebemassenschicht 9 und dem geschäumten Träger 8 hat es sich überraschend als besonders vorteilhaft herausgestellt, wenn sowohl die Haftklebemassenschicht 9 als auch der geschäumte Träger 8 auf ihren sich im Verbund jeweils zugewandten Seiten, bzw. die entsprechende Oberfläche des unteren PE-Films 10 und der Haftklebemassenschicht 9 vor der Zusammenbringung physikalisch vorbehandelt werden, insbesondere durch eine der vorgenannten physikalischen Methoden. Dabei können die Vorbehandlungsmethoden der beiden Schichten unabhängig voneinander gewählt werden, vorzugsweise werden sie durch die gleiche Methode vorbehandelt, besonders vorzugsweise mittels Coronavorbehandlung. Durch eine Vorbehandlung beider Schichten, insbesondere mittels Coronavorbehandlung, wird die innere Festigkeit der Verbindung signifikant verbessert, und die bei Verwendung der Haftklebemasse bereits geringe Menge eventuell verbleibender Rückstände des Klebebandes bei der Demontage von seinem Untergrund (wie etwa einem Druckzylinder oder einer Druckhülse) kann noch einmal erkennbar verringert werden.

Grundsätzlich ist es nun für den Fachmann überraschend, dass durch die Behandlung einer Klebemassenoberfläche mit einer physikalischen Methode eine Steigerung der Klebkraft erreicht werden kann. Da der Fachmann erwartet, dass alle diese Methoden mit Kettenbrüchen und einem Materialabbau einhergehen, würde die Bildung einer Schicht mit hohem Gehalt an polaren Gruppen, aber geringem innerem Zusammenhalt erwartet. Durch die schwach kohäsive Schicht mit erhöhter Polarität ist eine bessere Benetzung des Substrats durch die Klebemasse nicht überraschend, es werden jedoch reduzierte Adhäsionseigenschaften erwartet.

Die Behandlungsintensität einer Coronavorbehandlung wird als "Dosis" in $[W*min/m^2]$ angegeben, mit der Dosis $D=P/(b*v)$, mit P=elektrischer Leistung [W], b=Elektrodenbreite [m], und v=Bahngeschwindigkeit [m/min].

Die Coronavorbehandlung erfolgt bevorzugt bei einer Dosis von 1 bis 150 $W*min/m^2$. Besonders bevorzugt sind für die Haftklebemassenschicht eine Dosis von 10 bis 100 $W*min/m^2$, insbesondere eine Dosis von 40 bis 60 $W*min/m^2$. Für die Schaumträgerschicht werden bevorzugt höhere Dosen verwendet, so sind hier eine Dosis von 50 bis 150 $W*min/m^2$ und dabei insbesondere eine Dosis von 80 bis 120 $W*min/m^2$ sehr vorteilhaft. Vorzugsweise hat die Folie aus Polyethylenterephthalat (PET) eine Dicke von 5 $\mu$m bis 500 $\mu$m, bevorzugt 5 $\mu$m bis 60 $\mu$m, ganz besonders

bevorzugt sind 12 μm, 19 μm und 23 μm. Neben dem in Figur 1a dargestellten Produktaufbau kann die Stabilisierungsfolie auch aus Polyolefinen, Polyurethanen oder Polyvinylchlorid bestehen und neben der Ätzung auch auf verschiedene Weise vorbehandelt sein. So lassen sich auch hier zur Verbesserung der Verankerung die Stabilisierungsfolien physikalisch und chemisch vorbehandeln. Zur physikalischen Behandlung wird die Folie bevorzugt mit Flamme oder Corona oder Plasma behandelt. Für die chemische Vorbehandlung wird die Folie mit Vorstrich versehen, wobei in einer besonders bevorzugten Ausführungsform Reaktiv-Vorstriche verwendet werden. Als Vorstrichmaterialien eignen sich beispielweise Reaktivprimer. Weiterhin können auch hier - alternativ oder zusätzlich zu der Folienschicht - die angrenzenden Klebemassenschichten vorbehandelt sein, insbesondere entsprechend der oben beschriebenen Klebemassenschicht 9.

In einer weiteren bevorzugten Auslegung wird die Stabilisierungsfolie aus Polyethylenterephthalat oder einem anderen Material ein- oder beidseitig bedruckt. Diese Bedruckung kann unter einer später aufzubringenden Haftklebemasse liegen.

Für die Haftklebemassen 7 kann beispielsweise ebenfalls eine Acrylathaftklebemasse eingesetzt werden, aber es sind grundsätzlich auch andere Klebemassentypen verwendbar.

Weiterhin kann das Klebeband ein- oder beidseitig mit einer Abdeckung versehen sein, insbesondere einer solchen aus einem antiadhäsiven Material oder antiadhäsiv beschichteten Material. Die kann beispielsweise Papier oder eine entsprechende Folie - insbesondere jeweils ein- oder beidseitig siliconisiert - sein. Hierdurch wird ein längeres Lagern und eine bequeme Handhabung während des Gebrauchs gewährleistet.

Aber auch die sonstigen Klebebanddesigns, wie sie aus dem Stand der Technik insbesondere für die Verklebung von Druckklischees oder Druckplatten auf Druckzylindern oder -hülsen bekannt sind, können erfindungsgemäß realisiert sein, wobei durch die erfindungsgemäß zu verwendende Haftklebemasse insbesondere zumindest die Klebemasseschicht zur Verklebung auf dem Zylinder bzw. auf der Hülse realisiert ist.

Aufgrund seiner speziellen Eigenschaften lässt sich das beidseitig klebend ausgerüstete Klebeband hervorragend zur Fixierung von Druckplatten, insbesondere von - insbesondere mehrschichtigen - Photopolymer-Druckplatten (Klischees) auf Druckzylindern und auf Druckhülsen (Sleeves) einsetzen.

Das Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten vor Druckbeginn zu repositionieren, andererseits aber ist eine feste Verklebung der Platte während des Druckvorganges gewährleistet. Auch eine durch Farbreste verunreinigte Druckplatte lässt sich vom Haftklebeband ohne irgendeine Beschädigung entfernen. Ein Abschälen der Trägerschicht der Platte oder die Bildung von unerwünschten Falten in der Platte während des Entfernens treten nicht auf. Auch nach dem Entfernen des Klebebands von dem Druckzylinder verbleiben keine Rückstände.

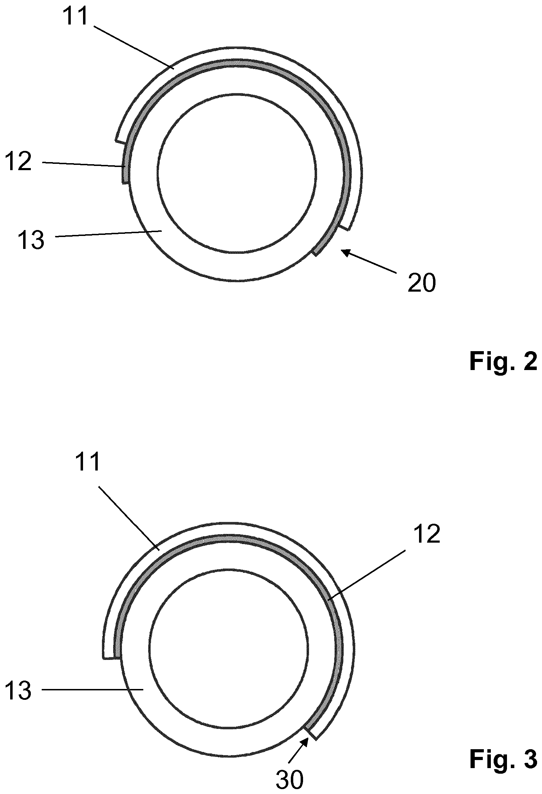

Druckklischees werden auf Druckzylindern und auf Druckhülsen auf unterschiedliche Arten und Weisen verklebt. Gängige Methoden zeigen die Figuren 2, 3 und 4:

Gemäß Figur 2 ist das Klischee (11) mittels eines Klebebandes (12) auf der Druckhülse (13) oder dem Druckzylinder (13) verklebt, wobei das Klebeband (12) größer als das Klischee (11) ist und daher mit freiliegenden Bereichen (20) unter dem Klischee (11) herausragt. Gemäß der Anwendungsvariante in Figur 3 schließen die Kanten des Verbundes aus Klebeband (12) und Klischee (11) bündig miteinander ab, Kante (30).

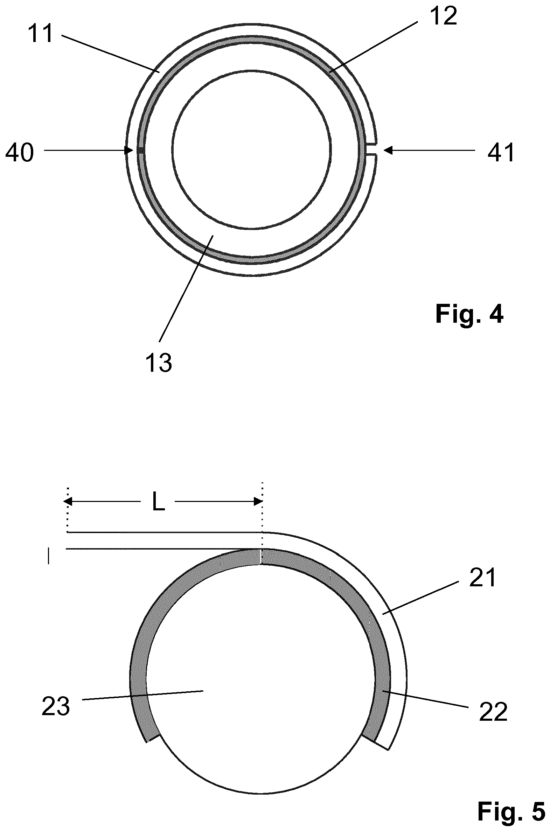

Gemäß Figur 4 umschließt das Klebeband (12) zum Verkleben des Klischees (11) den gesamten Umfang des Druckzylinders (13) bzw. der Druckhülse (13); wobei die Klebebandkanten an der aneinanderstoßen, Position (40). Um einem Verbundabheben vorzubeugen, wird das Druckklischee (11) derart auf dem Klebeband befestigt, dass dessen Kanten (Position 41) nicht an Stelle des Klebebandstoßes (Position 40) liegen.

Die Klebebänder zeigen ein sehr gutes Montageverhalten. Als Montageverhalten wird im Sinne dieser Schrift insbesondere die Soforthaftung bei dem Verkleben eines Klebebandes mittels der betreffenden Haftklebeschicht auf einem Untergrund verstanden, für ein gutes Montageverhalten soll ein kurzzeitiges Andrücken mit geringer Kraft also demgemäß zu einer guten und verlässlichen Haftung führen.

Die erfindungsgemäß zu verwendenden Haftklebemassen erfüllen die Anforderungen nach einfacher Montage, Repositionierbarkeit, sicherem Halt insbesondere auch auf polaren Untergründen und unter Lösungsmitteleinfluss. Weiterhin zeichnen sie sich durch eine einfache und rückstandsfreie Demontierbarkeit aus. Sie sind insbesondere für die Anwendung im Flexodruck, wie vorstehend dargestellt, geeignet.

## Experimenteller Teil

### Prüfmethoden

Herstellung eines Haftklebeyerbundes

Ein beidseitig siliconisiertes, genarbtes Abdeckmaterial mit einer strukturierten Oberfläche wird mit einer Haftklebemasse aus den Beispielen aus Lösung beschichtet. Dies erzielt den bestmöglichen Übertrag der Linerstruktur in die Acrylatklebemasse.

Nach einer Trocknung von 15 Minuten bei 120 °C beträgt das Masseauftragsgewicht 35 g/m$^2$. Masseseitig wird das beschichtete Abdeckmaterial mit einer mittels Trichloressigsäure beidseitig geätzten 19 $\mu$m dicken PET-Folie kaschiert. Anschließend wird über einen Transferträger eine handelsübliche Acrylatmasse mit einem Masseauftrag von 20 g/m$^2$ oder einer Klebmasse ähnlicher Eigenschaften auf die unbeschichtete Seite der geätzten PET-Folie des Verbundes laminiert und ein PE-EVA-Schaum mit einer Dicke von 500 $\mu$m und einem Raumgewicht von 250 kg/m$^3$ hinzukaschiert.

Auf diesen Schaumträger wird über einen Transferträger eine handelsübliche Acrylathaftklebemasse mit einem Masseauftrag von 60 g/m$^2$ auf die unbeschichtete Seite des vorherigen Verbundes auflaminiert (offenliegende Acrylathaftklebeschicht).

Gelpermeationschromatographie GPC (Methode A):

Die Angaben der zahlenmittleren und gewichtsmittleren Molekulargewichte $M_n$ und $M_w$ sowie der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, 10$^3$ Å, ID 8,0 mm · 50 mm verwendet. Zur Auftrennung werden die Säulen des Typs PSS-SDV, 5 $\mu$m, 10$^3$ Å sowie 10$^5$Å und 10$^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung).

90° Klebkrafttest (Method B):

Die Bestimmung der Klebkraft PET erfolgt bei einem Prüfklima von 23 °C +/- 1 °C Temperatur und 50 % +/- 5 % rel. Luftfeuchte.

Ein 20 mm breiter Streifen des Klebebandmusters wird auf eine PET-Platte aufgebracht. Diese PET-Platte wird zuvor zweimal mit Isopropanol gereinigt und danach 5 Minuten an der Luft liegen gelassen, damit das Lösungsmittel abdampfen kann.

Der Haftklebestreifen wird zehnmal mit einer Stahl-Andruckrolle mit einem Anpressdruck entsprechend einem Gewicht von 4 kg und einer Rollgeschwindigkeit von 1000 mm/min auf das Substrat aufgedrückt. Das Klebeband wird danach sofort mit einer Geschwindigkeit von 300 mm/min und in einem Winkel von 90° vom Substrat abgezogen.

Die Messergebnisse sind in N/cm angegeben und gemittelt aus drei Messungen.

NC-Test (Methode C):

Die Bestimmung der Klebkraft PET erfolgt bei einem Prüfklima von 23 °C +/- 1 °C Temperatur und 50 % +/- 5 % rel. Luftfeuchte.

Zwei 20 mm breite Streifen einer 50 $\mu$m dicken PET Folie werden zweimal mit Ethanol gereinigt und danach 5 Minuten an der Luft liegen gelassen, damit das Lösemittel abdampfen kann.

Ein Streifen, welcher nur mit Ethanol beidseitig gereinigt wurde, kennzeichnet den Blindwert. Der PET-Streifen wird zehnmal mit einer Stahl-Andruckrolle mit einem Anpressdruck entsprechend einem Gewicht von 4 kg und einer Rollgeschwindigkeit von 1000 mm/min auf die Haftklebemasse aufgedrückt.

Der zweite Streifen (NC-Streifen) nach der zweifachen Reinigung durch ein Nitrocellulose(NC)-Bad (Lösung 0,1%ige NC in Ethanol) gezogen und 20 Minuten in der Luft hängend getrocknet. Anschließend wird der PET-Streifen zehnmal mit einer Stahl-Andruckrolle mit einem Anpressdruck entsprechend einem Gewicht von 4 kg und einer Rollgeschwindigkeit von 1000 mm/min auf die Haftklebemasse aufgedrückt.

Beide Muster werden für 72 Stunden bei 40°C gelagert. Und anschließend für 1 Stunde bei 23 °C +/- 1 °C Temperatur und 50 % +/- 5 % rel. Luftfeuchte klimatisiert. Die PET-Streifen werden mit einer Geschwindigkeit von 300 mm/min und in einem Winkel von 90° vom Substrat abgezogen, um die Klebkraft zu ermitteln.

Gemessen werden die Maximalwerte der benötigten Kraft. Die Messergebnisse sind in N/cm angegeben und gemittelt aus drei Messungen. Der ermittelte Wert für die Klebkraft des NC-Streifens wird in Relation zu dem Wert des Blindwert-Streifens bewertet. Die Veränderung (Anstieg) der Klebkraft wird in Prozent angegeben.

Erfindungsgemäß vorteilhaft ist ein Anstieg der Klebkraft von maximal 15%.

Kantenabheben (Methode D):

Vergleiche hierzu Fig. 5

*Ohne Nitrocellulose (NC)*

Die Bestimmung des Kantenabheben erfolgt bei einem Prüfklima von 23 °C +/- 1 °C Temperatur und 50 % +/- 5 % rel. Luftfeuchte.

Aus dem zu untersuchenden doppelseitigen Haftkleberverbund (22) wird ein 250 mm x 160 mm großes Muster geschnitten. Dieses Muster wird mit der handelsüblichen, offen liegenden Acrylathaftklebeschicht auf einen Stahlzylinder (23) mit einem Durchmesser von 110 mm so geklebt, dass die kürzeren Kanten der Muster in Längsrichtung des Zylinders ausgerichtet sind. Anschließend wird das Abdeckmaterial abgezogen, so dass die Schicht der erfindungsgemäß zu verwendenden Haftklebemasse offen liegt. Auf die so verklebten Haftkleberverbund-Muster wird eine vollflächig belichtete Druckplatte (21) der Fa. DuPont Cyrel HOS mit der Abmessung Länge 210 mm x Breite 120 mm x Dicke 1,7 mm so auf die erfindungsgemäß zu verwendende Haftklebemasse verklebt, dass an jeder Kante 20 mm des darunter liegenden Haftkleberverbundes überstehen (zentrierte Aufbringung auf dem Haftkleberverbund-Muster). Das Klischee wird parallel zu der oberen Kante des Haftklebstoffverbundes ausgerichtet. Zuvor wurde die PET-Seite des Klischees mit Isopropanol gereinigt und für 5 Minuten an der Luft trocknen gelassen, damit das Lösemittel vollständig abdampfen kann.

Anschließend wird das Klischee ausgehend von der oberen Klischeekante mit einer Gummi-Rolle (Breite 100 mm, Durchmesser 30 mm, Shore-Härte A 45) angerollt. Die Anrollbewegung geschieht in Längsrichtung des Druckzylinders und wird kontinuierlich von jeweils einer Längskante des Klischees zur gegenüberliegenden Längskante des Klischees und wieder zurück ausgeführt. Die Anrollgeschwindigkeit beträgt dabei in Querrichtung 10 m/min. Der Druckzylinder rotiert gleichzeitig mit einer Oberflächengeschwindigkeit von 0,6 m/min, so dass mit der Gummirolle relativ zum Druckklischee eine Zick-Zack Bewegung in Richtung auf die zweite Querkante des Klischees beschreibt. Die Montage des Klischees auf den Haftkleberverbund erfolgte mit der entsprechenden Anpresskraft, die erforderlich ist, um das Klischee vollflächig und ohne Kantenabheben zu fixieren. Der Stahlzylinder wird mit dem so verklebten Muster im Stehen für 72 Stunden bei der vorgegebenen klimatischen Bedingung (40 °C) gelagert.

Aufgrund seines Rückstellverhaltens neigt das Klischees zum Kantenabheben. Je nach Beständigkeit der Verklebung der erfindungsgemäß zu verwendenden Haftklebemasse auf dem Klischee zeigt sich dabei ein Ablösen der Klischeekanten, die in Längsrichtung des Stahlzylinders verlaufen. Zur Beurteilung dieses Verhaltens wird die Länge L der abgehobenen Klischeekante bis zur ersten verbliebenen Kontaktstelle mit dem Untergrund bestimmt (Bestimmung des Maximalwert der Abhebung jeder Klischeekante; Mittelwert jeweils aus der Auswertung beider Kanten und drei Messdurchgängen).

Erfindungsgemäß vorteilhaft ist ein Kantenabheben von maximal 5mm.

*Mit Nitrocellulose (NC)*

Zur Beurteilung der Widerstandsfähigkeit der Klebemasse gegen Einflüsse der Bindemittel in Druckfarben wird eine 0,1 %ige Lösung von Cellulosenitrat in Ethanol hergestellt. Für den Test wird die niedrigviskose "Walsroder® Nitrocellulose" A400 verwendet, die einen Stickstoffgehalt von 10,7% - 11,3% und einen Substitutionsgrad von 1,89 - 2,05 aufweist.

Das Klischee mit der Abmessung Länge 210 mm x Breite 120 mm x Dicke 1,7 mm wird mit Isopropanol gereinigt und 5 min bei Luft liegen gelassen, damit das Lösemittel vollständig abdampfen kann. Das Klischee wird mit 3ml der NC-Lösung (0,1% NC und 99,9% Ethanol) mithilfe eines Stück Zellstoffs mit der Abmessung Länge 30 mm x Breite 30 mm x Dicke 2 mm bestrichen. Dies erfolgt in Streifen zunächst horizontal. Es ist darauf zu achten, dass das Klischee vollflächig mit der Lösung benetzt wurde. Das Klischee wird mit demselben Zellstoffstück ein zweites Mal, dies mal in vertikale Richtung bestrichen.

Anschließend wird das Klischee für 1 Minute an der Luft liegen gelassen, damit das Lösungsmittel abdampfen kann. Das Klischee wird nun analog eines Klischees ohne NC verklebt, gelagert und bewertet.

Erfindungsgemäß vorteilhaft ist ein Kantenabheben von maximal 5mm.

Demontage (Methode E):

*Ohne Nitrocelluslose (NC)*

Die Bestimmung des Kantenabheben erfolgt bei einem Prüfklima von 23 °C +/- 1 °C Temperatur und 50 % +/- 5 % rel. Luftfeuchte.

Aus dem zu untersuchenden doppelseitigen Haftkleberverbund wird ein 480 mm x 340 mm großes Muster geschnitten. Dieses Muster wird mit der offen liegenden Acrylathaftklebeschicht auf einen Stahlzylinder mit einem Durchmesser von 110 mm so geklebt, dass die längeren Kanten der Muster in Längsrichtung des Zylinders ausgerichtet sind. Anschließend wird das Abdeckmaterial abgezogen, so dass die Schicht der erfindungsgemäß zu verwendenden Haftklebemasse offen liegt. Auf die so verklebten Haftklebeverbund-Muster wird eine vollflächig belichtete Druckplatte der Fa. DuPont Cyrel HOS mit der Abmessung Länge 420 mm x Breite 330 mm x Dicke 1,14 mm so auf die erfindungsgemäß zu verwendende

Haftklebemasse verklebt, dass an den vertikalen Klischeekanten je 20 mm des darunter liegenden Haftklebeverbundes überstehen (zentrierte Aufbringung auf dem Haftklebeverbund-Muster). Das Klischee wird so ausgerichtet, dass die Klischeemitte über dem Spalt des doppelseitigen Haftklebeverbundes platziert ist.

Zuvor wurde die PET-Seite des Klischees mit Isopropanol gereinigt und für 5 Minuten an der Luft trocknen gelassen, damit das Lösemittel vollständig abdampfen kann. Anschließend wird das Klischee ausgehend von der oberen Klischeekante mit einer Gummi-Rolle (Breite 100 mm, Durchmesser 30 mm, Shore-Härte A 45) angerollt. Die Anrollbewegung geschieht in Längsrichtung des Druckzylinders und wird kontinuierlich von jeweils einer Längskante des Klischees zur gegenüberliegenden Längskante des Klischees und wieder zurück ausgeführt. Die Anrollgeschwindigkeit beträgt dabei in Querrichtung 10 m/min. Der Druckzylinder rotiert gleichzeitig mit einer Oberflächengeschwindigkeit von 0,6 m/min, so dass mit der Gummirolle relativ zum Druckklischee eine Zick-Zack Bewegung in Richtung auf die zweite Querkante des Klischees beschreibt. Die Montage des Klischees auf den Haftklebeverbund erfolgte mit der entsprechenden Anpresskraft, die erforderlich ist, um das Klischee vollflächig und ohne Kantenabheben zu fixieren. Der Stahlzylinder wird mit dem so verklebten Muster senkrecht auf einer seiner Stirnseiten stehend für 72 Stunden bei 40°C gelagert.

*Mit Nitrocellulose (NC)*

Ein Klischee der Abmessung Länge 420 mm x Breite 330 mm x Dicke 1,14 mm wird auf PET-Seite mit Isopropanol gereinigt und für 5 Minuten an der Luft trocknen gelassen, damit das Lösemittel vollständig abdampfen kann. Das Klischee wird mit 5ml der NC-Lösung (0,1% NC und 99,9% Ethanol) mithilfe eines Stück Zellstoffs mit der Abmessung Länge 30 mm x Breite 30 mm x Dicke 4 mm bestrichen. Dies erfolgt in Streifen zunächst horizontal. Es ist darauf zu achten, dass das Klischee vollflächig mit der Lösung benetzt wurde. Das Klischee wird mit demselben Zellstoffstück ein zweites Mal, dies mal in vertikale Richtung bestrichen.

Anschließend wird das Klischee für 1 Minute an der Luft liegen gelassen, damit das Lösungsmittel abdampfen kann. Das Klischee wird nun analog eines Klischees zum Bewerten des Demontierens verklebt und für 72 Stunden bei 40°C gelagert.

Die für die Demontage beider Klischees benötigte subjektiv aufzuwendende Kraft wird beurteilt. Die Demontage wird im Stehen durchgeführt, die Füße schulterbreit auseinander. Das Klischee wird mit beiden Händen an einer zur Längsrichtung des Stahlzylinders verlaufenden Kante angefasst und mit etwa 300 mm/min in Querrichtung zum Stahlzylinder (radial) abgezogen.

Die Einteilung des Kraftaufwandes beschreibt das in der Branche genutzte Bewertungsschema.

Ein mit "+" gekennzeichneter Kraftaufwand wird von Fachleuten als akzeptabel für die Anwendung angesehen. Negative Bewertungen ("-") werden als für die tägliche Anwendung nicht mehr akzeptabel erachtet.

Mikroschertest (Methode F)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13 mm · 10 mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 300 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)·100 / max].

*Beispiele*

Chemikalien:

| | Vernetzer: |
|---|---|
| Al-Chelat: | Al-(III)-acetylacetonat |
| | Firma Sigma Aldrich |
| Nitrocellulose (NC): | Walsroder® Nitrocellulose A400 |

Sofern im Einzelnen nicht anders angegeben, handelt es sich bei allen Prozentangaben im Folgenden um Gewichtsprozent.

Mengenangaben zur Zusammensetzung der Klebemasse aus der Polyamerkomponente I, der gegebenenfalls vorhandenen Polymerkomponente II sind bezogen auf 100 Gew-% der insgesamt durch diese Komponenten zusammengesetzten Klebemasse. Mengenangaben zum Vernetzer sind angegeben in Gewichtsteilen (GT), bezogen jeweils auf 100 Gewichtsteile aller Polyacrylatkomponenten.

**Beispiel 1**

Herstellung des Polyacrylats I (PA I)

Ein für radikalische Polymerisationen konventioneller 300 L-Reaktor wurde mit 2,0 kg Acrylsäure, 30,0 kg Isobornylacrylat (BA), 68,0 kg 2-Ethylhexylacrylat (EHA) sowie 72,4 kg Benzin/Aceton (70:30) befüllt. Nach 45minütiger Durchleitung von Stickstoffgas unter Rühren wurde der Reaktor auf 58 °C hochgeheizt und 50 g Vazo® 67 hinzugegeben. Anschließend wurde die Manteltemperatur auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Benzin/Aceton (70:30) und nach 6 h mit 10,0 kg Benzin/Aceton (70:30) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Molmassen mittels GPC (Messmethode A): $M_n$ = 62.800 g/mol; $M_w$ = 852.600 g/mol.

Hansen-Löslichkeitsparamter: $\delta_d$ = 17,1, $\delta_p$ = 6,5 und $\delta_H$ = 4,9

**Beispiel 2**

Herstellung des Polyacrylats II (PA II)

Ein für radikalische Polymerisationen unter Siedekühlung geeigneter konventioneller 2 L-Glasreaktor wurde mit 300 g einer Monomermischung, enthaltend 219 g Ethylhexylacrylat, 60g Methylacrylat und 21 g Acrylsäure, und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt.

Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt.

Molmassen mittels GPC (Messmethode A): Mn = 52500 g/mol, $M_W$ = 626000 g/mol) Hansen-Löslichkeitsparamter: $\delta_d$ = 17,0 $\delta_p$ = 8,0 und $\delta_H$ = 6,5

**Beispiel 3**

Herstellung des Polyacrylats III (PA III)

Ein für radikalische Polymerisationen unter Siedekühlung geeigneter konventioneller 2 L-Glasreaktor wurde mit 300 g einer Monomermischung, enthaltend 130,5 g Butylacrylat, 130,5 g Ethylhexylacrylat, 30g Methylacrylat und 15 g Acrylsäure, und 200 g Aceton: Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt.
Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt.
Molmassen mittels GPC (Messmethode A): Mn = 98500 g/mol, $M_W$ = 1515000 g/mol). Hansen-Löslichkeitsparamter: $\delta_d$ = 17,0 $\delta_p$ = 8,2 und $\delta_H$ = 6,4

**Beispiel 4**

Herstellung des Polyacrylats IV (PA IV)

Ein für radikalische Polymerisationen unter Siedekühlung geeigneter konventioneller 2 L-Glasreaktor wurde mit 300 g einer Monomermischung, enthaltend 291 g Ethylhexylacrylat, 9 g Acrylsäure, und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt.
Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt. Molmassen mittels GPC (Messmethode A): Mn = 56500 g/mol, $M_W$ = 1037000 g/mol). Hansen-Löslichkeitsparamter: $\delta_d$ = 16,8 $\delta_p$ = 7,1 und $\delta_H$ = 5,2

**Beispiel 5**

Herstellung des Polyacrylats V (PA V)

Ein für radikalische Polymerisationen unter Siedekühlung geeigneter konventioneller 2 L-Glasreaktor wurde mit 300 g einer Monomermischung, enthaltend 130,5 g Butylacrylat, 130,5 g Ethylhexylacrylat, 30g Methylacrylat und 15 g Acrylsäure, und 200 g Aceton: Siedegrenzenbenzin 60/95 (30:70) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt.
Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt.
Molmassen mittels GPC (Messmethode A): Mn = 43500 g/mol, $M_W$ = 730000 g/mol). Hansen-Löslichkeitsparamter: $\delta_d$ = 16,8 $\delta_p$ = 7,1 und $\delta_H$ = 5,1

**Beispiel 6**

Herstellung des Polyacrylats VI (PA VI)

Ein für radikalische Polymerisationen unter Siedekühlung geeigneter konventioneller 2 L-Glasreaktor wurde mit 300 g einer Monomermischung, enthaltend 228 g Ethylhexylacrylat, 60g Stearylacrylat und 12 g Acrylsäure, und 200 g Aceton: Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt.

Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt.

Molmassen mittels GPC (Messmethode A): Mn = 77900 g/mol, $M_W$ = 1334000 g/mol) Hansen-Löslichkeitsparamter: $\delta_d$ = 16,8 $\delta_p$ = 6,6 und $\delta_H$ = 4,8

**Beispiel 7**

Das PA I, hergestellt analog Beispiel 1, wurde mit einer Vernetzerlösung (3 Gew.-% in Aceton) versetzt und wie in "Herstellung eines Haftklebeverbundes" beschrieben beschichtet. Das entsprechende Klebebandmuster wurde eine Woche bei Normklima (23 °C, 50 % relative Feuchte) konditioniert.

Die Polymerkomponente PA I wurde mit Al-Chelat vernetzt (0,3 Gewichtsteile (GT) bezogen auf 100 GT Polymerkomponente 1).

**Beispiele 8-27**

Das PA I (Polymerkomponente 1), hergestellt analog Beispiel 1, wurde unter Rühren mit einer zweiten Polymerkomponente versetzt. Die Polymerkomponente 2 und die jeweiligen Mengen sind der Tabelle 1 zu entnehmen. Anschließend wurde die Polymermischung mit einer Vernetzerlösung (3 Gew.-% in Aceton) versetzt und wie in "Herstellung eines Haftklebeverbundes" beschrieben beschichtet. Das entsprechende Klebebandmuster wurde eine Woche bei Normklima (23 °C, 50 % relative Feuchte) konditioniert.

Die Polymermischung wurde mit Al-Chelat vernetzt (0,3 GT bezogen auf 100 GT Polymerkomponente 1 + Polymerkomponente 2).

Tabelle 1

| Beispiel | Polmerkompenente 1 | Anteil Polmerkompenente 1 [Gew.-%] | Polmerkompenente 2 | Anteil Polmerkompenente 2 [Gew.-%] | GT Vernetzer (Al-Chelat) |
|---|---|---|---|---|---|
| 8 | PA I (Bsp. 1) | 98 | PA II (Bsp. 2) | 2 | 0,3 |
| 9 | PA I (Bsp. 1) | 95 | PA II (Bsp. 2) | 5 | 0,3 |
| 10 | PA I (Bsp. 1) | 90 | PA II (Bsp. 2) | 10 | 0,3 |
| 11 | PA I (Bsp. 1) | 85 | PA II (Bsp. 2) | 15 | 0,3 |
| 12 | PA I (Bsp. 1) | 98 | PA III (Bsp. 3) | 2 | 0,3 |
| 13 | PA I (Bsp. 1) | 95 | PA III (Bsp. 3) | 5 | 0,3 |
| 14 | PA I (Bsp. 1) | 90 | PA III (Bsp. 3) | 10 | 0,3 |
| 15 | PA I (Bsp. 1) | 85 | PA III (Bsp. 3) | 15 | 0,3 |
| 16 | PA I (Bsp. 1) | 98 | PA IV (Bsp. 4) | 2 | 0,3 |
| 17 | PA I (Bsp. 1) | 95 | PA IV (Bsp. 4) | 5 | 0,3 |
| 18 | PA I (Bsp. 1) | 90 | PA IV (Bsp. 4) | 10 | 0,3 |
| 19 | PA I (Bsp. 1) | 85 | PA IV (Bsp. 4) | 15 | 0,3 |
| 20 | PA I (Bsp. 1) | 98 | PA V (Bsp. 5) | 2 | 0,3 |
| 21 | PA I (Bsp. 1) | 95 | PA V (Bsp. 5) | 5 | 0,3 |
| 22 | PA I (Bsp. 1) | 90 | PA V (Bsp. 5) | 10 | 0,3 |
| 23 | PA I (Bsp. 1) | 85 | PA V (Bsp. 5) | 15 | 0,3 |
| 24 | PA I (Bsp. 1) | 98 | PA VI (Bsp. 6) | 2 | 0,3 |
| 25 | PA I (Bsp. 1) | 95 | PA VI (Bsp. 6) | 5 | 0,3 |
| 26 | PA I (Bsp. 1) | 90 | PA VI (Bsp. 6) | 10 | 0,3 |
| 27 | PA I (Bsp. 1) | 85 | PA VI (Bsp. 6) | 15 | 0,3 |

Ergebnisse

Erfindungsgemäße Beispiele: 8-10, 12-14, 16-18

Gegenbeispiele (erfüllen die erfindungsgemäß gestellten Anforderungen nicht): 7, 11, 15, 19-27.

Die Ergebnisse der Untersuchungen sind in Tabelle 2 wiedergegeben.

Alle erfindungsgemäß zu verwendenden Klebemassen weisen zudem einen Vernetzungszustand auf, der nach Methode F einem Mikroscherweg zwischen 125 μm und 250 μm entspricht Polyacrylat-Haftklebemassen bestehen in dem bekannten Stand der Technik aus nur einer Polymerkomponente. Wie Beispiel 7 zeigt, kann mit einem Polyacrylat grundsätzlich ein Haftkleber mit guter Klebkraft auf PET (Methode F) und vorteilhaftem Kantenabheben (Methode D) bei guter Demontage (Methode E, ohne Cellulosenitrat [kurz als NC bezeichnet]) erreicht werden. Deutliche Schwächen treten bei einem solchen Haftkleber jedoch bei der Verwendung der entsprechenden Klebebänder in Druckprozessen mit Cellulosenitrat-haltigen Druckfarben auf. Beispiel 7 zeigt einen Anstieg der Klebkraft aufgrund von NC von 51,3% (Methode C), und zugleich ein nicht vorteilhaftes Demontage-Verhalten.

Ohne dass dies vorherzusehen war, wird die erfindungsgemäß gestellte Aufgabe durch eine Klebemasse erreicht, die mindestens zwei Polymerkomponenten beinhaltet.

Durch Untersuchungen mittels Dynamischer Differenzkalometrie (Dynamic Scanning Calorimetry; DSC) und/oder, sofern für die entsprechende Probe vorteilhafter, Elektronenrasteruntersuchung wurde festgestellt, dass alle erfindungsgemäßen Haftklebemassen phasensepariert vorlagen, während alle Massen mit einer Unterschiedlichkeit Z kleiner 1 (Beispiele 20 bis 27) dies nicht taten.

Bevorzugt werden die Polymerkomponenten derart gewählt, dass die Unterschiedlichkeit Z der Polymerkomponenten mindestens den Wert 1 annimmt.

Den Ergebnissen der Beispiele 20-27 ist zu entnehmen, dass ein Haftkleber, bestehend aus 2 Polymerkomponenten mit einer Unterschiedlichkeit Z von kleiner 1, die gestellte Aufgabe nicht lösen kann. Bei den genannten Beispielen ist ein Anstieg der Klebkraft durch Cellulosenitrat (NC) von mindestens 20 % feststellbar (Methode C). Diese nicht vorteilhafte Eigenschaft spiegelt sich ebenso in einer nachteilhaften Demontage wider (Methode E).

Für den Fachmann überraschend zeigen Haftkleber, bestehend aus 2 Polymerkomponenten mit einer Unterschiedlichkeit Z von größer 1 keine nachteiliges Verhalten bei Kontakt mit NC bei klebtechnischen Untersuchungen. Die Beispiele 8-19 belegen dies, indem sie einen Klebkraftanstieg durch NC (Methode C) von nur maximal 14,6 % zeigen. Zudem sind in Anwendungstest für die Demontage (Methode E) nur vorteilhafte Ergebnisse ermittelbar. Die Klebkraft auf PET nach Methode B wird zudem im Vergleich zu den Ergebnissen von Beispiel 7 nicht beeinflusst. Dementgegen ist bei den Beispielen 8-19 ein nicht vorteilhafter Trend des Kantenabhebens nach Methode D erkennbar. Ein nicht akzeptables Kantenabheben von > 5 mm tritt bei einem Anteil von 15 Gew.-% der zweiten Polymerkomponente auf. Beispiele 11, 15, 19 zeigen diese Ergebnisse, obwohl auch diese Phasenseparation zeigen (DSC bzw. Elektronenmikroskopie).

Erfindungsgemäß vorteilhaft sind somit die Beispiele 8-10, 12-14, 16-18 hervorzuheben in Bezug auf ein vorteilhaftes Kantenabheben von maximal 5 mm (Methode E), einer leichten Demontage nach Methode D und einem vorteilhaft geringen Anstieg der Klebkraft durch NC (Methode C).

Tabelle 2

| Beispiel | Kompenente 1 | Gew.-% | Kompenente 2 | Gew.-% | Z | Klebkraft PET [N/cm] (Methode B) | MSW (Methode F) | | NC Test (Methode C) | | | Anwendungstest | | |
|---|---|---|---|---|---|---|---|---|---|---|---|---|---|---|
| | | | | | | | max [$\mu$m] | elast | PET Streifen | Klebkraft [N/cm] | Anstieg der Klebkraft durch NC [%] | Platte | Kantenabheben (Methode D) | Demontage (Methode E) |
| 7 | PA I | 100 | / | / | / | 6,0 | 79 | 80 | ohne NC | 3,9 | 51,3 | ohne NC | 1 | + |
| | | | | | | | | | mit NC | 5,9 | | mit NC | 0 | - |
| **8** | PA I | 98 | PA II | 2 | 3,21 | 5,9 | 73 | 72 | ohne NC | 3,5 | 8,6 | ohne NC | 1 | + |
| | | | | | | | | | mit NC | 3,8 | | mit NC | 1 | + |
| **9** | PA I | 95 | PA II | 5 | 3,21 | 6,1 | 71 | 73 | ohne NC | 3,3 | 9,1 | ohne NC | 1 | + |
| | | | | | | | | | mit NC | 3,6 | | mit NC | 1 | + |
| **10** | PA I | 90 | PA II | 10 | 3,21 | 5,7 | 75 | 81 | ohne NC | 3,6 | 5,6 | ohne NC | 3 | + |
| | | | | | | | | | mit NC | 3,8 | | mit NC | 2 | + |
| 11 | PA I | 85 | PA II | 15 | 3,21 | 5,7 | 78 | 80 | ohne NC | 4,0 | 5,0 | ohne NC | 7 | + |
| | | | | | | | | | mit NC | 4,2 | | mit NC | 6 | + |
| **12** | PA I | 98 | PA III | 2 | 3,42 | 6,2 | 76 | 73 | ohne NC | 3,5 | 5,7 | ohne NC | 1 | + |
| | | | | | | | | | mit NC | 3,7 | | mit NC | 1 | + |
| **13** | PA I | 95 | PA III | 5 | 3,42 | 6 | 70 | 70 | ohne NC | 3,3 | 3,0 | ohne NC | 1 | + |
| | | | | | | | | | mit NC | 3,4 | | mit NC | 1 | + |
| **14** | PA I | 90 | PA III | 10 | 3,42 | 5,8 | 71 | 76 | ohne NC | 3,5 | 0,0 | ohne NC | 3 | + |
| | | | | | | | | | mit NC | 3,5 | | mit NC | 3 | + |

(fortgesetzt)

| Beispiel | Komponente 1 | Gew.-% | Komponente 2 | Gew.-% | Z | Klebkraft PET [N/cm] (Methode B) | MSW (Methode F) | | NC Test (Methode C) | | | Anwendungstest | | |
|---|---|---|---|---|---|---|---|---|---|---|---|---|---|---|
| | | | | | | | max [μm] | elast | PET Streifen | Klebkraft [N/cm] | Anstieg der Klebkraft durch NC [%] | Platte | Kantenabheben (Methode D) | Demontage (Methode E) |
| 15 | PA I | 85 | PA III | 15 | 3,42 | 5,9 | 74 | 83 | ohne NC | 3,3 | 6,1 | ohne NC | 9 | + |
| | | | | | | | | | mit NC | 3,5 | | mit NC | 7 | + |
| **16** | PA I | 98 | PA IV | 2 | 1,14 | 5,6 | 74 | 83 | ohne NC | 4,1 | 14,6 | ohne NC | 1 | + |
| | | | | | | | | | mit NC | 4,7 | | mit NC | 0 | + |
| **17** | PA I | 95 | PA IV | 5 | 1,14 | 5,8 | 66 | 84 | ohne NC | 3,7 | 13,5 | ohne NC | 1 | + |
| | | | | | | | | | mit NC | 4,2 | | mit NC | 1 | + |
| **18** | PA I | 90 | PA IV | 10 | 1,14 | 5,9 | 77 | 84 | ohne NC | 4 | 10,0 | ohne NC | 5 | + |
| | | | | | | | | | mit NC | 4,4 | | mit NC | 5 | + |
| 19 | PA I | 85 | PA IV | 15 | 1,14 | 6,3 | 77 | 84 | ohne NC | 3,8 | 10,5 | ohne NC | 7 | + |
| | | | | | | | | | mit NC | 4,2 | | mit NC | 6 | + |
| 20 | PA I | 98 | PA V | 2 | 0,98 | 5,6 | 65 | 73 | ohne NC | 3,8 | 26,3 | ohne NC | 1 | + |
| | | | | | | | | | mit NC | 4,8 | | mit NC | 0 | - |
| 21 | PA I | 95 | PA V | 5 | 0,98 | 6,3 | 70 | 71 | ohne NC | 3,8 | 21,1 | ohne NC | 1 | + |
| | | | | | | | | | mit NC | 4,6 | | mit NC | 1 | - |
| 22 | PA I | 90 | PA V | 10 | 0,98 | 6,2 | 71 | 78 | ohne NC | 3,7 | 24,3 | ohne NC | 5 | + |
| | | | | | | | | | mit NC | 4,6 | | mit NC | 0 | - |

(fortgesetzt)

| Beispiel | Kompenente 1 | Gew.-% | Kompenente 2 | Gew.-% | Z | Klebkraft PET [N/cm] (Methode B) | MSW (Methode F) max [$\mu$m] | MSW (Methode F) elast | NC Test (Methode C) PET Streifen | NC Test (Methode C) Klebkraft [N/cm] | NC Test (Methode C) Anstieg der Klebkraft durch NC [%] | Anwendungstest Platte | Anwendungstest Kantenabheben (Methode D) | Anwendungstest Demontage (Methode E) |
|---|---|---|---|---|---|---|---|---|---|---|---|---|---|---|
| 23 | PA I | 85 | PA V | 15 | 0,98 | 5,9 | 79 | 80 | ohne NC | 3,5 | 20,0 | ohne NC | 8 | + |
| | | | | | | | | | mit NC | 4,2 | | mit NC | 1 | - |
| 24 | PA I | 98 | PA VI | 2 | 0,44 | 6,2 | 71 | 80 | ohne NC | 4,1 | 43,9 | ohne NC | 1 | + |
| | | | | | | | | | mit NC | 5,9 | | mit NC | 1 | - |
| 25 | PA I | 95 | PA VI | 5 | 0,44 | 6,0 | 67 | 73 | ohne NC | 4,4 | 40,9 | ohne NC | 1 | + |
| | | | | | | | | | mit NC | 6,2 | | mit NC | 0 | - |
| 26 | PA I | 90 | PA VI | 10 | 0,44 | 5,6 | 79 | 84 | ohne NC | 3,9 | 48,7 | ohne NC | 4 | + |
| | | | | | | | | | mit NC | 5,8 | | mit NC | 1 | - |
| 27 | PA I | 85 | PA VI | 15 | 0,44 | 5,9 | 77 | 73 | ohne NC | 3,5 | 57,1 | ohne NC | 7 | + |
| | | | | | | | | | mit NC | 5,5 | | mit NC | 1 | - |

Tabelle 3

| CAS | Monomer | HSP (Stefanis-Panayiotou) | | |
|---|---|---|---|---|
| | | $\delta_d$ | $\delta_p$ | $\delta_h$ |
| 79-10-7 | Acrylic acid | 17,7 | 8,6 | 11,1 |
| 141-32-2 | n-Butyl acrylate | 17,1 | 8,6 | 6,5 |
| 28343-58-0 | Heptadecyl acrylate | 15,0 | 1,6 | 2,5 |
| 689-12-3 | Isobutyl acrylate | 16,9 | 8,2 | 6,6 |
| 12542-30-2 | Dihydrodicyclopentadienyl Acrylate | 20,2 | 4,6 | 4,0 |
| 140-88-5 | Ethyl acrylate | 17,1 | 9,2 | 7,3 |
| 7328-17-8 | Ethylendiglycol acrylate | 17,2 | 10,4 | 6,2 |
| 103-11-7 | 2-Ethyhexyl acrylate | 16,7 | 7,0 | 4,7 |
| 2499-95-8 | Hexyl acrylate | 17,0 | 7,9 | 5,7 |
| 818-61-1 | Hydroxyethyl acrylate | 17,8 | 12,0 | 15,3 |
| 5888-33-5 | Isobornyl acrylate | 17,6 | 6,1 | 4,1 |
| 29590-42-9 | Isooctyl acrylate | 16,8 | 7,0 | 5,0 |
| 2156-97-0 | Lauryl acrylate | 16,9 | 2,5 | 0,8 |
| 96-33-3 | Methyl acrylate | 17,2 | 9,5 | 7,7 |
| 3121-61-7 | Methoxyethyl acrylate | 17,5 | 10,7 | 7,8 |
| 925-60-0 | Propyl acrylate | 17,1 | 8,9 | 6,9 |
| 149021-58-9 | Propylheptylacrylat | 16,7 | 6,4 | 3,9 |
| 4813-57-4 | Stearyl acrylate | 16,7 | 1,7 | 0,1 |
| 1663-39-4 | tert.-Butyl acrylate | 16,4 | 9,5 | 6,0 |
| 97-88-1 | n-Butyl methacrylate | 16,7 | 8,4 | 6,0 |
| 6140-75-6 | Heptadecyl meth acrylate | 14,6 | 2,3 | 2,8 |
| 101-43-9 | Cyclohexyl methacrylate | 17,9 | 6,4 | 5,8 |
| 688-84-6 | 2-Ethyhexyl methacrylate | 16,4 | 6,8 | 4,2 |
| 97-63-2 | Ethyl methacrylate | 16,8 | 9,0 | 6,8 |
| 00106-91-2 | Glycidyl methacrylate | 18,6 | 12,0 | 7,6 |
| 868-77-9 | Hydroxyethyl methacrylate | 17,4 | 11,5 | 14,4 |
| 97-86-9 | Iso-Butyl methacrylate | 16,5 | 8,0 | 6,2 |
| 7534-94-3 | Isobornyl methacrylate | 17,3 | 5,9 | 3,6 |
| 142-90-5 | Lauryl methacrylate | 16,5 | 3,3 | 1,0 |
| 80-62-6 | Methyl methacrylate | 16,8 | 9,3 | 7,2 |
| 32360-05-7 | Stearyl methacrylate | 16,4 | 2,5 | 0,3 |
| 84100-23-2 | tert-butyl cyclohexyl methacrylate | 15,6 | 3,6 | 3,3 |
| 585-07-9 | tert.-Butyl methacrylate | 16,1 | 9,3 | 5,5 |
| 98-83-9 | alpha-Methylstyrol | 18,6 | 3,4 | 2,5 |
| 107-13-1 | Acrylonitrile | 18,0 | 14,2 | 6,7 |
| 107-58-4 | N-tert.-butyl acrylamide | 14,6 | 11,3 | 5,9 |

(fortgesetzt)

| CAS | Monomer | HSP (Stefanis-Panayiotou) | | |
|-----|---------|------|------|------|
| | | $\delta_d$ | $\delta_p$ | $\delta_h$ |
| 2235-00-9 | N-Vinylcaprolactam | 20,2 | 10,8 | 6,4 |
| 88-12-0 | N-Vinylpyrrolidon | 20,2 | 11,5 | 7,2 |
| 100-42-5 | Styrene | 18,9 | 2,6 | 2,2 |
| 108-05-4 | Vinylacetate | 16,7 | 9,5 | 8,0 |
| 79-06-1 | Acrylamide | 16,2 | 11,4 | 11,9 |

**Patentansprüche**

1. Verwendung einer Haftklebemasse, umfassend mindestens 60 Gew.-% eines Polymerblends, wobei der Polymerblend aus einer ersten Polymerkomponente A, einer zweiten Polymerkomponente B und gegebenenfalls einer oder mehreren weiteren Polymerkomponenten besteht, wobei die erste Polymerkomponente A zu mindestens x Gew.-% im Polymerblend vorliegt, wobei 90 ≤ x ≤ 99, und wobei die zweite Polymerkomponente B und die gegebenenfalls vorhandenen weiteren Polymerkomponenten in Summe zu y Gew.-% im Polymerblend vorliegen, wobei y = 100 - x, wobei jede Polymerkomponente zu mindestens 60 Gew.-% auf (Meth)Acrylmonomere zurückzuführen ist, **dadurch gekennzeichnet, dass** keine der Polymerkomponenten bei Raumtemperatur mit einer der anderen Polymerkomponenten homogen mischbar ist, so dass ein Mehrphasensystem vorliegt; zum Verkleben von Druckplatten auf insbesondere gekrümmten Oberflächen.

2. Verwendung nach Anspruch 1, **dadurch gekennzeichnet, dass** der Polymerblend mindestens 99,9 Gew.-% an der Haftklebemasse, insbesondere 100 % an der Haftklebemasse ausmacht.

3. Verwendung nach einem der vorangehenden Ansprüche, **dadurch gekennzeichnet, dass** die erste Polymerkomponente A aus einem einzigen Polymer besteht.

4. Verwendung nach einem der Ansprüche 1 oder 2, **dadurch gekennzeichnet, dass** die Polymerkomponente A ein homogenes Gemisch aus zwei oder mehreren Polymeren ist.

5. Verwendung nach einem der vorangehenden Ansprüche, **dadurch gekennzeichnet, dass** der Polymerblend ausschließlich aus den Polymerkomponenten A und B gebildet wird, so dass ein Zweiphasensystem vorliegt.

6. Verwendung nach einem der vorangehenden Ansprüche, **dadurch gekennzeichnet, dass** die Polymerkomponente B aus einem einzigen Polymer besteht.

7. Verwendung nach einem der Ansprüche 1 bis 5, **dadurch gekennzeichnet, dass** die Polymerkomponente B ein homogenes Gemisch aus zwei oder mehreren Polymeren ist.

8. Verwendung nach Anspruch 1, **dadurch gekennzeichnet, dass** jede Polymerkomponente solche Polymere umfasst, die jeweils durch Polymerisation von Monomeren erhalten werden, wobei die Zusammensetzung der Monomere für die Polymere jeder Polymerkomponente derart ausgewählt werden, dass die Unterschiedlichkeit Z der Hansen-Löslichkeitsparameter jeder der Polymerkomponenten mit jeder der anderen Polymerkomponenten mehr als den Wert 1 annimmt, wobei der Hansen-Löslichkeitsparameter mit der in der Beschreibung angegebenen Methode bestimmt wird.

9. Verwendung nach einem der Ansprüche 1 oder 8, **dadurch gekennzeichnet, dass** die Haftklebemasse vernetzt wird.

10. Verwendung nach einem der Ansprüche 1 bis 9, **dadurch gekennzeichnet, dass** die Druckplatte eine solche aus einer Polyethylenterephthalat-Folie ist, auf die zumindest eine Schicht eines Fotopolymers aufgebracht ist.

**11.** Verwendung nach einem der Ansprüche 1 bis 10, **dadurch gekennzeichnet, dass** die Oberfläche, auf der die Druckplatte verklebt wird, aus Stahl, Polyurethan oder aus einem Glasfaser-Harz-Material besteht.

**12.** Verwendung nach einem der Ansprüche 1 bis 11, **dadurch gekennzeichnet, dass** die Oberfläche, auf der die Druckplatte verklebt wird, Teil eines Druckzylinders oder eines Drucksleeves ist.

**13.** Verwendung nach einem der Ansprüche 1 bis 12 in Druckprozessen unter Verwendung von celluslosenitrathaltigen Druckfarben.

**Claims**

**1.** Use of a pressure-sensitive adhesive comprising at least 60 wt% of a polymer blend,
where the polymer blend consists of a first polymer component A, a second polymer component B, and optionally one or more further polymer components, where the first polymer component A is present at not less than x wt% in the polymer blend, where $90 \leq x \leq 99$,
and where the second polymer component B and any further polymer components present are present in total at y wt% in the polymer blend, where $y = 100 - x$,
where each polymer component derives to an extent of at least 60 wt% from (meth)acrylic monomers, **characterized in that** none of the polymer components is homogeneously miscible at room temperature with any of the other polymer components, and so a multiphase system is present, for bonding printing plates to surfaces, more particularly to curved surfaces.

**2.** Use according to Claim 1, **characterized in that** the polymer blend makes up at least 99.9 wt% of the pressure-sensitive adhesive, more particularly 100% of the pressure-sensitive adhesive.

**3.** Use according to either of the preceding claims, **characterized in that** the first polymer component A consists of a single polymer.

**4.** Use according to either of Claims 1 and 2, **characterized in that** the polymer component A is a homogeneous mixture of two or more polymers.

**5.** Use according to any of the preceding claims, **characterized in that** the polymer blend is formed exclusively of polymer components A and B, and so a two-phase system is present.

**6.** Use according to any of the preceding claims, **characterized in that** the polymer component B consists of a single polymer.

**7.** Use according to any of Claims 1 to 5, **characterized in that** the polymer component B is a homogeneous mixture of two or more polymers.

**8.** Use according to Claim 1, **characterized in that** each polymer component comprises polymers obtained in each case by polymerization of monomers, the composition of the monomers for the polymers of each polymer component being selected such that the dissimilarity Z of the Hansen solubility parameters of each of the polymer components with each of the other polymer components adopts a value of more than 1, the Hansen solubility parameter being determined by the method specified in the descritpion.

**9.** Use according to either of Claims 1 and 8, **characterized in that** the pressure-sensitive adhesive is crosslinked.

**10.** Use according to any of Claims 1 to 9, **characterized in that** the printing plate is one composed of a polyethylene terephthalate film bearing at least one applied layer of a photopolymer.

**11.** Use according to any of Claims 1 to 10, **characterized in that** the surface to which the printing plate is bonded consists of steel, polyurethane or of a glass fibre-resin material.

**12.** Use according to any of Claims 1 to 11, **characterized in that** the surface to which the printing plate is bonded is part of a printing cylinder or printing sleeve.

**13.** Use according to any of Claims 1 to 12 in printing processes using printing inks containing cellulose nitrate.

**Revendications**

**1.** Utilisation d'une masse autoadhésive, comprenant au moins 60 % en poids d'un mélange de polymères, le mélange de polymères étant constitué par un premier composant polymère A, un deuxième composant polymère B et le cas échéant un ou plusieurs autres composants polymères, le premier composant polymère A étant présent à raison d'au moins x % en poids, où $90 \leq x \leq 99$, et le deuxième composant polymère B et les autres composants polymères le cas échéant présents étant présents au total à raison de y % en poids, où y = 100 - x, chaque composant polymère résultant à raison d'au moins 60 % en poids de monomères de (méth)acryle, **caractérisée en ce qu'**aucun des composants polymères ne peut être mélangé de manière homogène à température ambiante avec l'un des autres composants polymères, de telle sorte qu'on est en présence d'un système à plusieurs phases ; pour le collage de plaques d'impression sur des surfaces en particulier incurvées.

**2.** Utilisation selon la revendication 1, **caractérisée en ce que** le mélange de polymères représente au moins 99,9 % en poids de la masse autoadhésive, en particulier 100 % de la masse autoadhésive.

**3.** Utilisation selon l'une quelconque des revendications précédentes, **caractérisée en ce que** le premier composant polymère A est constitué d'un seul polymère.

**4.** Utilisation selon l'une quelconque des revendications 1 et 2, **caractérisée en ce que** le composant polymère A est un mélange homogène de deux polymères ou plus.

**5.** Utilisation selon l'une quelconque des revendications précédentes, **caractérisée en ce que** le mélange de polymères est formé exclusivement des composants polymères A et B, de telle sorte qu'on est en présence d'un système à deux phases.

**6.** Utilisation selon l'une quelconque des revendications précédentes, **caractérisée en ce que** le composant polymère B est constitué d'un seul polymère.

**7.** Utilisation selon l'une quelconque des revendications 1 à 5, **caractérisée en ce que** le composant polymère B est un mélange homogène de deux polymères ou plus.

**8.** Utilisation selon la revendication 1, **caractérisée en ce que** chaque composant polymère comprend des polymères qui sont obtenus à chaque fois par polymérisation de monomères, la composition des monomères pour les polymères de chaque composant polymère étant choisie de manière telle que la différence Z du paramètre de solubilité de Hansen de chacun des composants polymères par rapport à chacun des autres composants polymères a une valeur supérieure à 1, le paramètre de solubilité de Hansen étant déterminé par le procédé indiqué dans la description.

**9.** Utilisation selon l'une quelconque des revendications 1 ou 8, **caractérisée en ce que** la masse autoadhésive est réticulée.

**10.** Utilisation selon l'une quelconque des revendications 1 à 9, **caractérisée en ce que** la plaque d'impression est une plaque en une feuille de poly(téréphtalate d'éthylène), sur laquelle au moins une couche d'un photopolymère est appliquée.

**11.** Utilisation selon l'une quelconque des revendications 1 à 10, **caractérisée en ce que** la surface sur laquelle la plaque d'impression est collée est constituée d'acier, de polyuréthane ou d'un matériau en fibres de verre-résine.

**12.** Utilisation selon l'une quelconque des revendications 1 à 11, **caractérisée en ce que** la surface, sur laquelle la plaque d'impression est collée, fait partie d'un cylindre d'impression ou d'un blanchet d'impression.

**13.** Utilisation selon l'une quelconque des revendications 1 à 12 dans des procédés d'utilisation utilisant des encres d'impression comprenant du nitrate de cellulose.

**Fig. 1a**

**Fig. 1b**

11

12

13

20

**Fig. 2**

11

12

13

30

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 760389 A
- WO 03057497 A
- WO 2004067661 A

- EP 2226372 A1
- WO 2014001096 A1

**In der Beschreibung aufgeführte Nicht-Patentliteratur**

- **CHARLES M. HANSEN.** Hansen Solubility Parameters: A User's Handbook. CRC Press, 2007
- **EMMANUEL STEFANIS ; COSTAS PANAYIOTOU.** Prediction of Hansen Solubility Parameters with a New Group-Contribution Method. *Int. J. Thermophys.,* 2008, vol. 29, 568-585

- Prediction of Hansen Solubility Parameters with a New Group-Contribution Method. *Int. J. Thermophys.,* 2008, 578-582